Europäisches Patentamt

European Patent Office

Office européen des brevets

(19)

(11) **EP 0 626 795 B1**

(12) **EUROPEAN PATENT SPECIFICATION**

(45) Date of publication and mention
of the grant of the patent:
**21.07.1999 Bulletin 1999/29**

(51) Int Cl.$^6$: **H04N 9/86**, H04N 11/18

(21) Application number: **94303737.4**

(22) Date of filing: **25.05.1994**

(54) **SECAM chroma processing circuit including filters having a frequency-shiftable transmission characteristic**

Schaltkreis zur Verarbeitung eines SECAM-Chrominanzsignals, mit Filtern mit in der Frequenzlage veschiebbarer Durchgangscharakteristik

Circuit de traitement de signal de chrominance SECAM, comprenant des filtres ayant une caractéristique de transmission décalable en fréquence

(84) Designated Contracting States:
**FR**

(30) Priority: **27.05.1993 JP 12568993**
**17.09.1993 JP 23147293**

(43) Date of publication of application:
**30.11.1994 Bulletin 1994/48**

(73) Proprietors:
- **KABUSHIKI KAISHA TOSHIBA**
  **Kawasaki-shi, Kanagawa-ken 210-8572 (JP)**
- **TOSHIBA AVE CO., LTD**
  **Minato-ku, Tokyo 105 (JP)**

(72) Inventors:
- **Murayama, Akihiro, c/o Intell.Property Div.**
  **Tokyo (JP)**
- **Horiguchi, Yoshinori, c/o Intell.Property Div.**
  **Tokyo (JP)**
- **Morita, Makoto, c/o Intell.Property Div.**
  **Tokyo (JP)**

(74) Representative: **Maury, Richard Philip**
**MARKS & CLERK,**
**57-60 Lincoln's Inn Fields**
**London WC2A 3LS (GB)**

(56) References cited:
**EP-A- 0 040 272**     **EP-A- 0 462 746**
**FR-A- 2 537 817**     **US-A- 4 255 758**

## Description

The present invention relates an SECAM chroma processing circuit for automatically adjusting SECAM-type chroma signal processing and preferably used mainly for a video tape recorder (VTR).

In the SECAM system, an R-Y signal (red color-difference signal) frequency-modulated at the carrier frequency of 4.40625 MHz and a B-Y signal (blue color-difference signal) frequency-modulated at the carrier frequency of 4.25 MHz are alternately transmitted every horizontal period. The amplitude of these frequency-modulated signals is suppressed in the vicinity of the carrier frequencies of the signals at the transmission side in order to decrease dot disturbances by suppressing a carrier wave amplitude nearby the achromatic wavelength. This suppression filter is called an antibell filter because its characteristic has an antibell shape. The central frequency of the antibell filter during transmission is 4.286 MHz. The frequency of 4.286 MHz is hereafter shown as 4.3 MHz. For a television picture tube, a signal is processed after passing it through a filter in which the signal amplitude increases in the vicinity of the carrier frequency to offset the group delay characteristic and amplitude characteristic at the transmission side, inversely to the antibell filter of the transmission side.

In the chroma recording/reproducing system of a VTR, the SECAM system includes L-SECAM system and ME-SECAM system. Of these two systems, the L-SECAM system uses a method of dividing the chroma signal component of a color television signal into four parts to convert the frequency into a low frequency and record the frequency and multiplying the frequency for reproduction by four to convert the frequency into the original high sub-carrier-wave frequency.

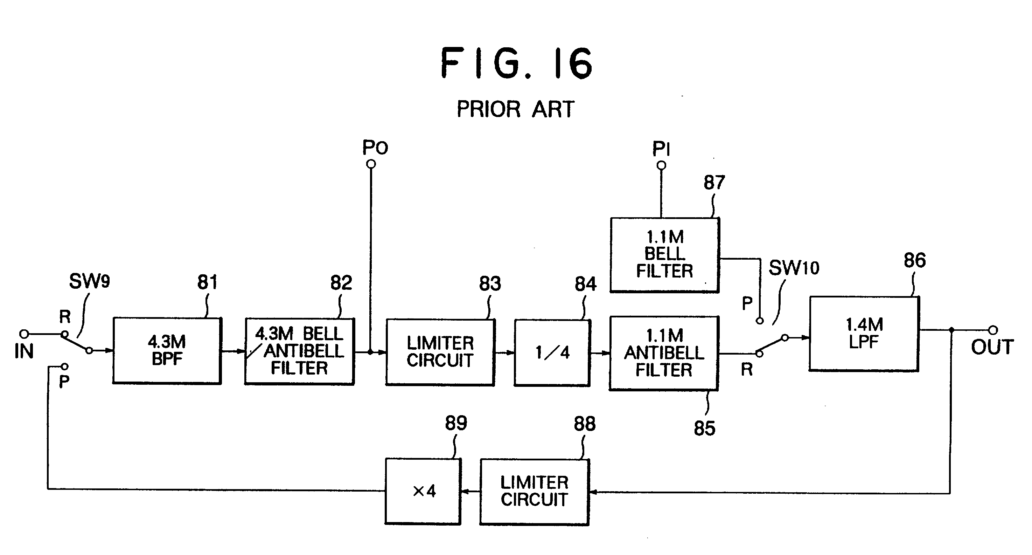

FIG. 16 shows the processing system of an existing VTR recording/reproducing system of the L-SECAM system.

For recording, switches $SW_9$ and $SW_{10}$ are connected to the R side. A color television signal inputted to an REC chroma input terminal IN is supplied to 4.3 MHz BPF 81 through the switch $SW_9$. The BPF 81 extracts only an SECAM chroma signal from the color television signal. The chroma signal is inputted to a 4.3 MHz bell/antibell filter 82. The 4.3 MHz bell/antibell filter 82 serves as a bell filter for recording. A limiter circuit 83 amplifies the output of the 4.3 MHz bell/antibell filter 82. A four-to-one frequency 84 decreases the frequency of the output signal of the limiter circuit 83 to 1/4. The SECAM chroma signal whose frequency is thus decreased to 1.1 MHz is inputted to the antibell filter 85 having the central frequency of 1.0715 MHz (1.0715 MHz is hereafter shown as 1.1 MHz). The output of the antibell filter 85 is supplied to 1.4 MHz LPF 86 through the switch $SW_{10}$. The 1.4 MHz LPF 86 suppresses unnecessary components at a high frequency band and extracts only the necessary band component to output it to an REC chroma output terminal OUT.

Because the SECAM chroma component of a received television signal is a frequency-modulated signal whose amplitude characteristic is suppressed as described above, the input chroma signal amplitude varies depending on the hue. The 4.3 MHz bell filter 82 is a filter for returning the amplitude characteristic and the group delay characteristic operated at the transmission side to their original state. The amplitude of the frequency-modulated signal, after passing through the 4.3 MHz bell filter 82, becomes constant independent of the hue. The amplitude characteristic is flat even after frequency-dividing this signal by four to convert it into a low frequency. When passing the output of the 4.3 MHz bell filter 82 through the 1.1 MHz antibell filter 85, a suppression effect is obtained like at the transmission side and also, an effect for decreasing the energy of the frequency-modulated signal and decreasing disturbances against the frequency-modulated signal of Y is obtained. Therefore, the envelope of the output signal of the REC chroma terminal OUT becomes apparently the same as that of the 4.3 MHz chroma signal.

For reproduction, the switches $SW_9$ and $SW_{10}$ are connected to the P side. The SECAM chroma signal recorded by the above method is inputted through a PB, ie playback, chroma input terminal PI. The SECAM chroma signal inputted through the PB chroma input terminal PI is inputted to 1.4 MHz LPF 86 through a 1.1 MHz bell filter 87 and the switch $SW_{10}$. Though the FM component of a Y signal is also superimposed on a VTR reproduction signal, only the low-frequency chroma component is left after the FM component passes through the 1.4 MHz LPF 86. A limiter circuit 88 amplifies the output of the 1.4 MHz LPF 86. A frequency quadrupler 89 converts the output of the limiter circuit 88 to four times the frequency of that output. The output signal of the frequency quadrupler 89 is inputted to the 4.3 MHz BPF 81 through the switch $SW_9$. The output of the 4.3 MHz BPF 81 is inputted to the 4.3 MHz bell/antibell filter 82. The 4.3 MHz bell/antibell filter 82 now serves as a antibell filter for reproduction. The output of the 4.3 MHz bell/antibell filter 82 is outputted from a PB chroma output terminal PO.

The recorded chroma signal inputted to the PB chroma input terminal PI has a suppressed carrier due to the antibell filter used when recording the chroma signal. Therefore, the amplitude of the signal varies depending on the hue. The 1.1 MHz bell filter 87 cancels the characteristic to make the amplitude characteristic flat. The SECAM chroma signal which is made flat is frequency-multiplied by four to convert it to the frequency of the signal of the transmitted frequency band. Moreover, to reproduce the amplitude characteristic for transmission, the signal is outputted through the 4.3 MHz bell/antibell filter 82.

The 4.3 MHz bell/antibell filter 82 shown in FIG. 16 uses one resonator both for recording and reproduction and changes its characteristics for recording and reproduction. The above change uses the method disclosed in Japanese Patent Publication No. JP-A-4-024918 (filter circuit) (1992). In that case, however, the denominator and numerator of the transfer function of the bell filter replace each other by contriving circuits so that the antibell characteristic is obtained.

In the present case, however, because the bell and antibell filters are realized with resonators, adjustment is required and moreover, there is a problem that many parts are necessary because all filters including BPF and LPF comprise discrete elements. Moreover, to incorporate every filter into an IC and incorporate discrete elements into the IC, the bell and antibell filters must be changed. Therefore, a fatal problem occurs that a signal processing system must be constituted with built-in filters. Moreover, because the built-in filter is not suitable for the operation of replacing the denominator and numerator of its transfer function each other, it is basically difficult to realize the impedance replacement shown in said Japanese Patent Publication No. JP-A-024918 (1992). Furthermore, the bell and antibell filters require an adjustment accuracy of approx. 0.5% for their central frequency. Therefore, to incorporate the filters into the IC, a measure for omitting adjustment must be added separately. Unless there are a signal processing systems meeting the above requirements and an automatic adjusting method referred to the system, it is impossible to incorporate into an IC all filter elements which are hitherto discrete elements.

The bell and antibell filters are indispensable not only for recording or reproduction by a VTR but also for transmission or reception of television signals of the SECAM system.

When the transfer functions of the bell and antibell filter are assumed as B(s) and AB(s) respectively, B(s) and AB(s) are shown by the following expressions (1) and (2).

$$B(s) = \frac{S^2 + \dfrac{\omega_0}{Q_n}.S + \omega^2}{S^2 + \dfrac{\omega_0}{Q_p}.S + \omega^2} \tag{1}$$

$$AB(s) = \frac{S^2 + \dfrac{\omega_0}{Q_p}.S + \omega^2}{S^2 + \dfrac{\omega_0}{Q_n}.S + \omega^2} \tag{2}$$

$Q_n$ and $Q_p$ in the expressions (1) and (2) represent an independent quality Q respectively and their values are $(1.6)^{1/2}$ and 16 respectively. FIGs. 17 and 18 show the frequency-gain characteristic of a bell filter and the frequency-phase characteristic of it respectively. FIGs. 19 and 20 show the frequency-gain characteristic of an antibell filter and the frequency-phase characteristic of it, respectively.

The phase characteristic of the antibell filter does not belong to the phase characteristic of a general filter but the antibell filter has a characteristic that the phase is 0° at the central frequency.

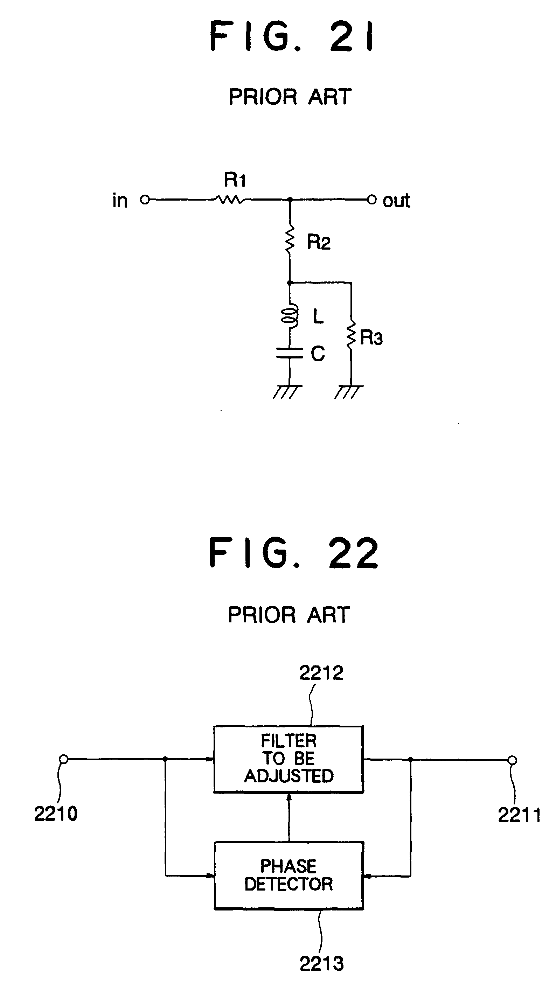

The circuit constitution of an existing antibell filter is described below. FIG. 21 shows a circuit in which an antibell filter comprises discrete elements. In FIG. 21, symbol "in" represents an input terminal, "out" represents an output terminal, $R_1$ to $R_3$ represent resistances, L represents a coil, and C represents a capacitor. When assuming the transfer function of this circuit as ABd(s), the following expression (3) is obtained.

$$ABd(s) = \frac{R_2 + R_3}{R_1 + R_2 + R_3} \cdot \frac{S^2 + \dfrac{R_2.R_3}{L(R_2 + R_3)}.S + \dfrac{1}{LC}}{S^2 + \dfrac{R_3(R_1 + R_2)}{L(R_1 + R_2 + R_3)}.S + \dfrac{1}{LC}} \tag{3}$$

Results of obtaining $Q_n$ and $Q_p$ by the above expression (3) are shown by the following expressions (4) and (5).

$$Q_n = \frac{L(R_1 + R_2 + R_3)}{R_3(R_1 + R_2)} \tag{4}$$

$$Q_p = \frac{L(R_2 + R_3)}{R_2.R_3} \tag{5}$$

The central frequency (hereafter shown as $f_0$) of the filter is shown by the following expression (6).

$$f_0 = \frac{1}{(2\pi\sqrt{LC})} \, Hz \tag{6}$$

That is, the gain is determined by resistance values, Q is determined by inductance and resistance values, and $f_0$ is determined by inductance and capacitance values.

In general, the central frequency $f_0$ of this circuit is adjusted by using a variable inductance for L in FIG. 21. In this case, the $f_0$ adjusting accuracy is considered below when the manufacturing fluctuation of the variable inductance is assumed as ±15% and that of other elements is assumed as 0. When assuming that the central frequency $f_c$ of the variable inductance at the central value is shown by the following expression (7) and the central frequency $f_c'$ at the maximum or minimum inductance is shown by the following expression (8), the variable range of the central frequencies is obtained as ±7% from the following expression (9).

$$f_c = \frac{1}{2\pi\sqrt{LC}} \tag{7}$$

$$f_c' = \frac{1}{2\pi\sqrt{1.15LC}} \tag{8}$$

$$\frac{f_c'}{f_c} = \pm\sqrt{1.15} = \pm 1.07 \tag{9}$$

When the central frequency of the antibell filter is assumed as 4.286 MHz, the variable range comes to ±300 KHz. If the inductance varying method uses a rotary system of the six-turn type, the frequency changes by 5 KHz only for 1/60 turn. Thereby, it is found that an antibell filter must be adjusted very strictly.

FIG. 22 shows a general automatic filter-frequency adjusting system. Symbol 2210 represents an input terminal, 2211 represents an output terminal, 2212 represents a filter to be adjusted, and 2213 represents a phase detector. In this case, it is necessary to use a filter to be adjusted whose cutoff frequency can be varied by voltage or current and a phase detector which outputs a voltage or current corresponding to a deviation from the phase difference of 90°.

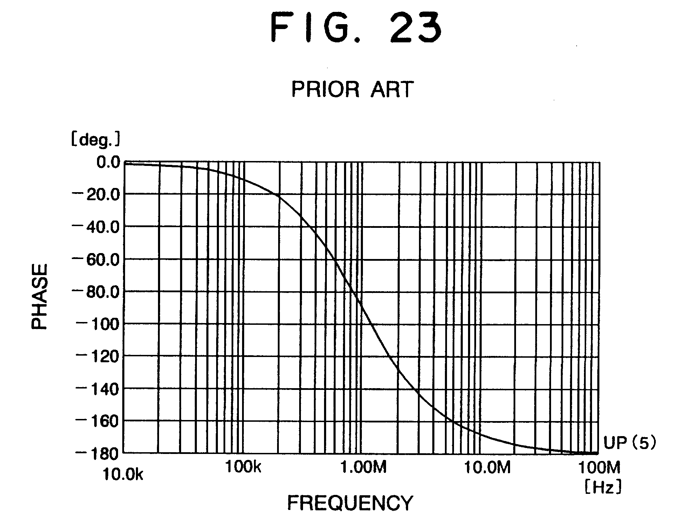

When it is assumed that the filter to be adjusted uses a second-order LPF and the cutoff frequency is 1 MHz, the phase characteristic is as shown in FIG. 23.

To perform automatic adjustment, it is necessary to input a frequency equal to the cutoff frequency to the input terminal of the filter. If the cutoff frequency of the filter to be adjusted is deviated for any reason, the phase detector outputs a voltage or current corresponding to the deviation to the filter to be adjusted. By this feedback, the filter to be adjusted is automatically adjusted.

However, it is very difficult to automatically adjust bell and antibell filters because there is not a point where the phase rotates by 90° in view of the circuit constitution.

As described above, the existing system requires a lot of parts and adjustment of them because all filters including BPF and LPF comprise discrete elements. To completely incorporate filters and discrete elements into an IC, it is necessary to change between bell and antibell. Moreover, it is difficult to realize the replacement of impedances of the built-in filters for adjustment of them. Bell and antibell filters require an adjustment accuracy of approx. 0.5% for their central frequencies. Moreover, to incorporate the filters into the IC, a measure for omitting adjustment is necessary. Therefore, unless there is any proper automatic adjustment method, it is impossible to incorporate in an IC all the filters which are hitherto discrete elements.

Bell and antibell filters constituted with discrete elements have problems in that the $f_0$ adjustment requires much manual operation and a lot of time, and moreover, they are weak in mechanical vibrations and deterioration with age. Moreover, because there is not a point where the phase rotates up to 90° it is difficult to make an automatic adjustment.

EP-A-0040272 describes a demodulator system used for a television receiver in which a bell filter is constituted with an exterior coil and a variable reactance circuit. The reactance is varied to change a centre frequency for adjustment.

FR-A-8220773 describes a circuit and a method for automatically adjusting a filter in a television receiver. A bell filter is constituted with an external tank circuit. An external capacity is added to the tank circuit to change and adjust a frequency.

US-A-4255758 describes a self-adjusting bell filter circuit for use in a camera encoder. An amplitude of an output signal of the bell filter is detected and the frequency is adjusted so as to obtain the maximum amplitude.

A first aspect of the present invention is defined in claim 1 of the appended claims, with preferred features being recited in claims 2 and 3 and 6 to 10. A second aspect of the present invention is defined in claim 4 of the present invention, with preferred features being recited in claim 5.

It is an object of the present invention to provide a low-cost and rational SECAM chroma processing circuit by proposing a SECAM chroma signal processing system constituted with built-in filters and enabling omitting the adjustment of the built-in filters.

Moreover, the present invention provides an automatic frequency adjusting circuit for automatically adjusting the central frequencies of bell and antibell filters built in an IC very accurately.

Changing $\omega_0$ of a transfer function is much easier than recombining transfer functions of a built-in filter. Noticing this point, the circuit of the present invention uses a method of shifting the frequency characteristic of a bell filter or antibell filter instead of changing between bell and antibell and means for changing central frequencies while keeping the amplitude characteristic constant. Therefor, input sides of filters are changed instead of changing output signals of the bell and antibell filters so that the signal processing system can shift frequencies. Moreover, the above object is achieved by separately preparing a reference signal, sending the reference signal to the bell and antibell filters at the same time to successively monitor and adjust the filter characteristic and thereby realizing a measure for omitting adjustment.

By using the frequency shifting method, it is possible to change characteristics suitable for a built-in filter and incorporate into an IC a filter which is hitherto set outside. Moreover, because connections of a BPF and a bell filter can be changed, it is possible to realize the same recording/reproduction function as the existing one even if bell and antibell filters are constituted with built-in filters for shifting frequencies. Furthermore, because operations from input to output can be realized by the same processing system, it is possible to process signals in one direction and share a chroma input pin.

Because the reference signal is directly inputted to a built-in filter to monitor the frequency characteristic, it is possible to eliminate all deviation factors such as fluctuation of time constants in an IC, temperature drift of characteristics, and change with time.

Moreover, the present invention makes it possible to obtain the output of a second-order LPF in a circuit having a constitution in which the transfer functions of bell and antibell filters are transformed into the mathematical expression of [1-(transfer function of BPF)]. The second-order LPF is characterized by obtaining a phase characteristic such that the phase rotates by 90° at the central frequency and by detecting the phase of the output of the second-order LPF to apply feedback to bell and antibell filters. Thereby, because the central frequencies of bell and antibell filters can automatically be adjusted, it is possible to incorporate bell and antibell filters into an IC.

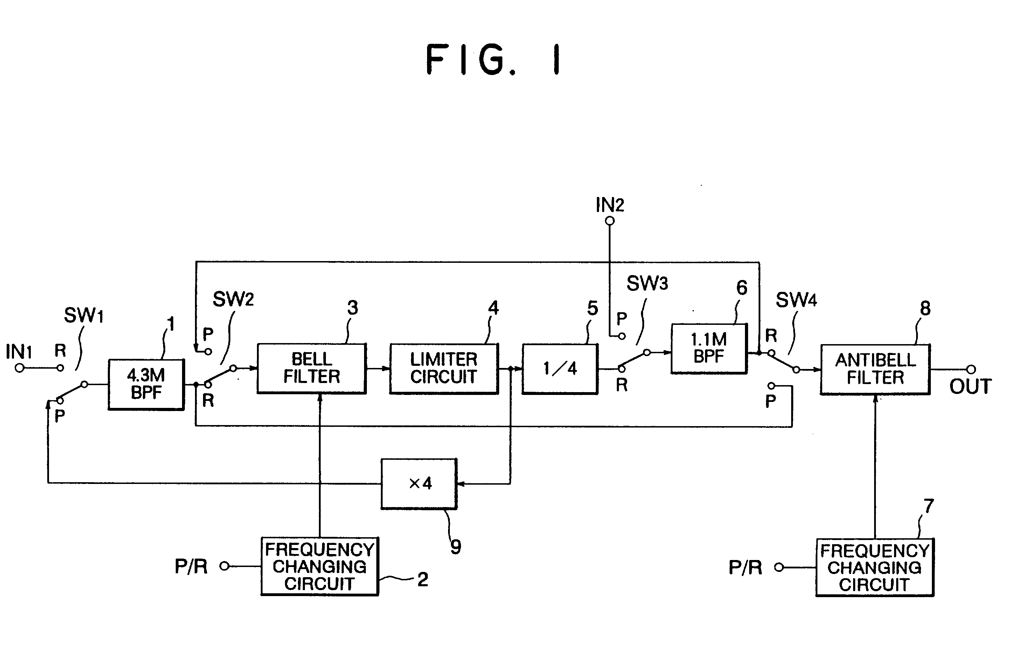

FIG. 1 is a circuit block diagram for explaining an embodiment of the present invention;

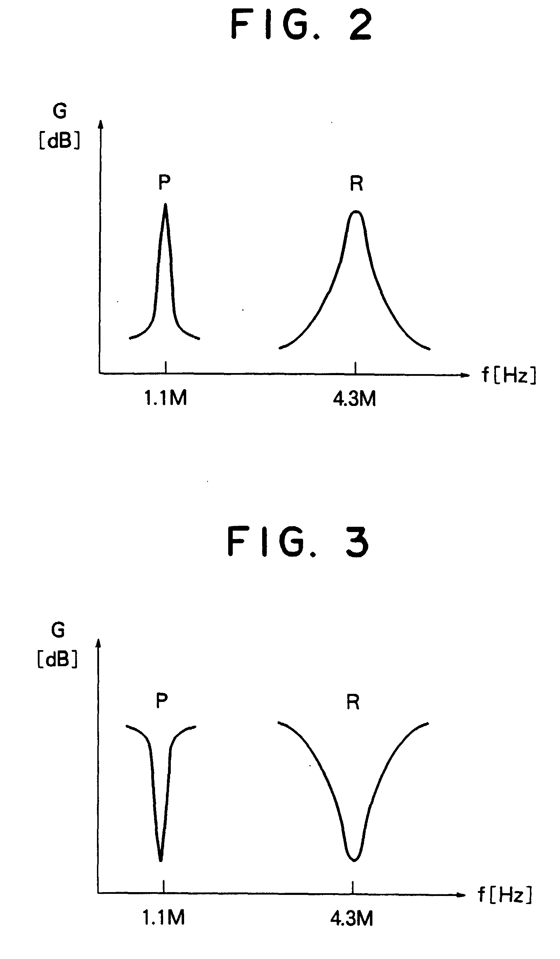

FIG. 2 is a characteristic diagram for explaining the operation of the circuit in FIG. 1;

FIG. 3 is a characteristic diagram for explaining the operation of the circuit in FIG. 1;

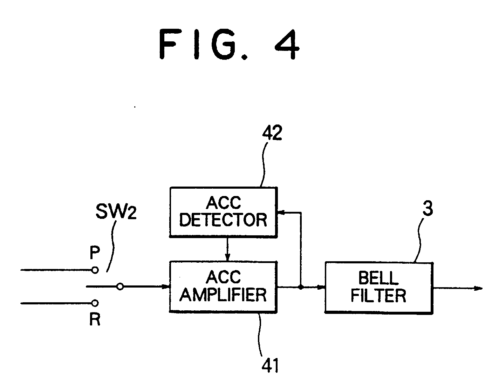

FIG. 4 is a circuit block diagram for explaining the input section of the bell and antibell filters in FIG. 1;

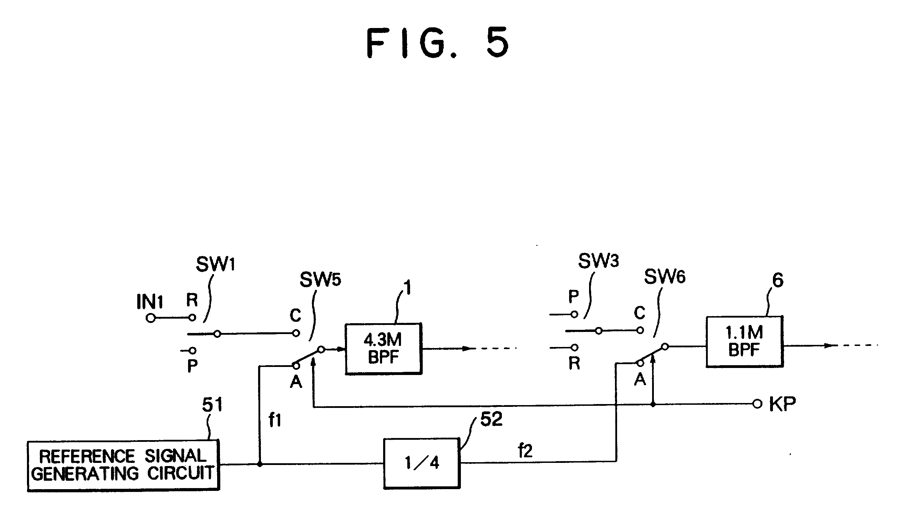

FIG. 5 is a circuit block diagram for explaining the automatic adjustment in FIG. 1;

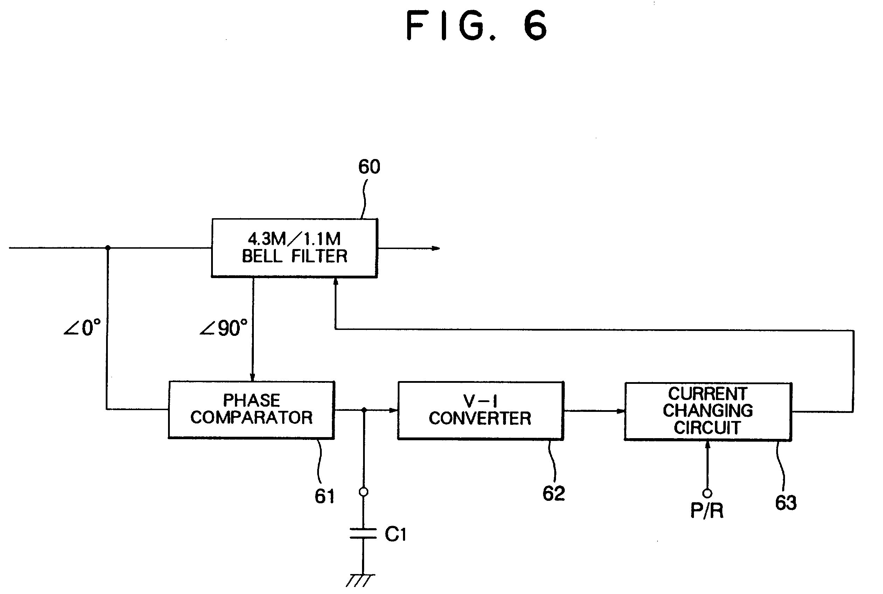

FIG. 6 is a circuit block diagram for explaining FIG. 5;

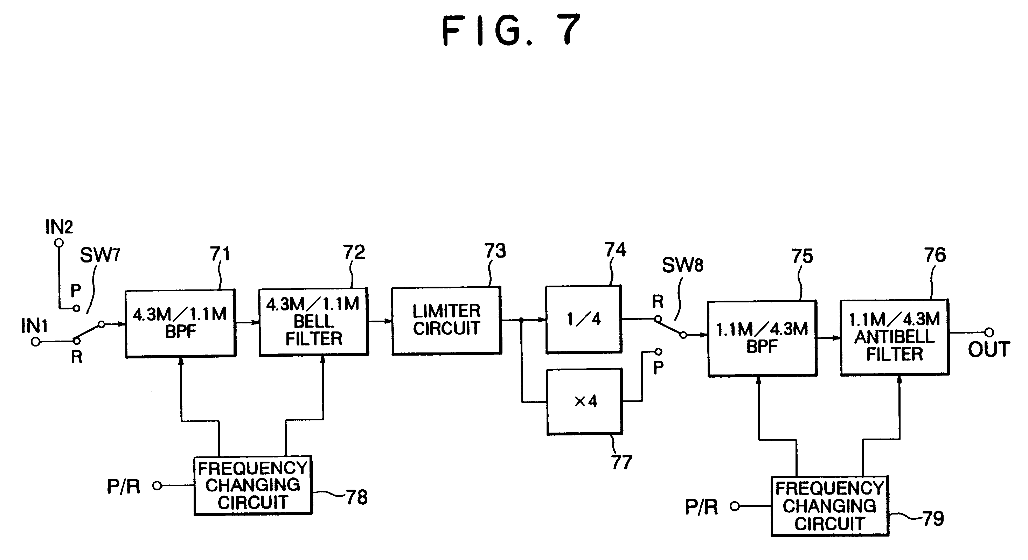

FIG. 7 is a circuit block diagram for explaining another embodiment of the present invention;

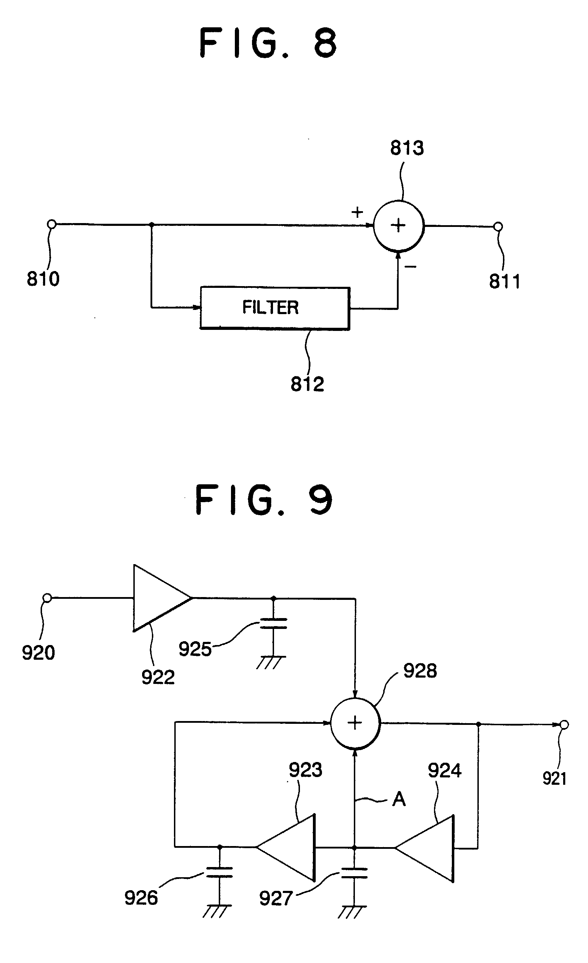

FIG. 8 is an illustration for explaining the concept of the present invention;

FIG. 9 is a circuit block diagram showing the main portion in FIG. 8;

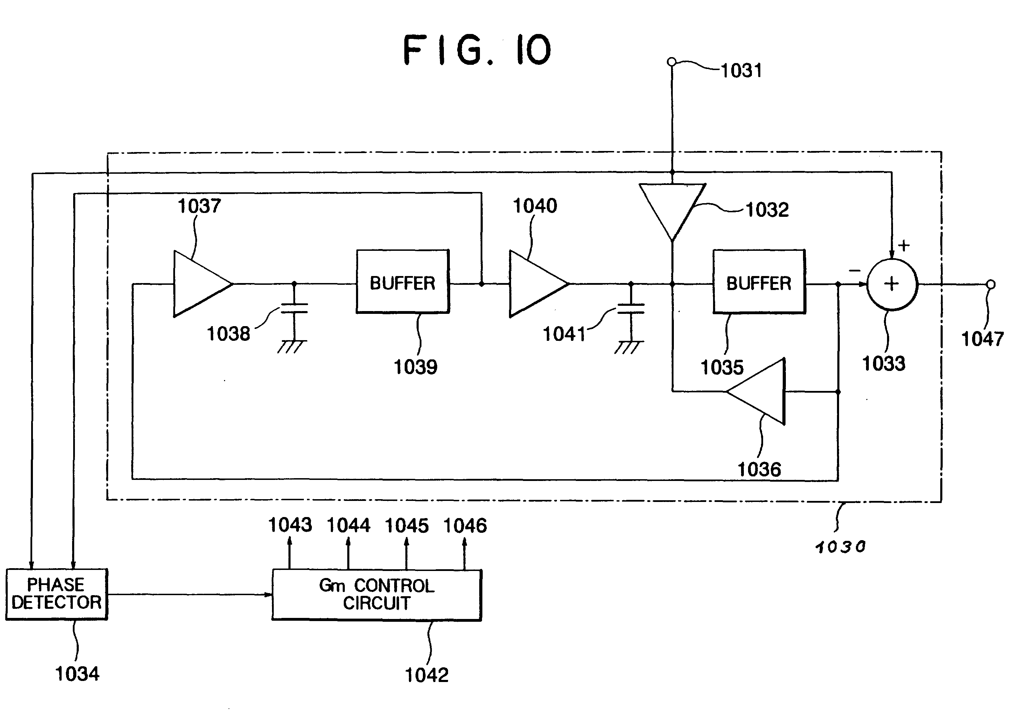

FIG. 10 is a circuit block diagram for explaining an embodiment of the present invention for automatically adjusting the frequency of an antibell filter;

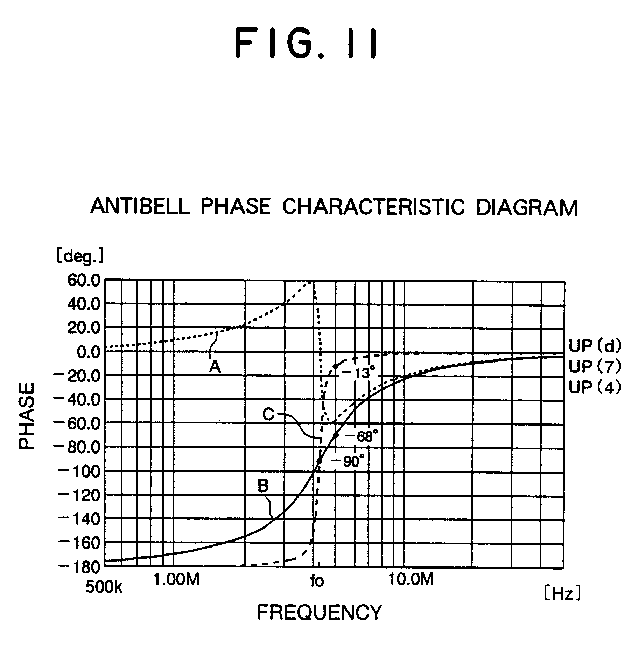

FIG. 11 is a phase characteristic diagram of the antibell filter of the present invention;

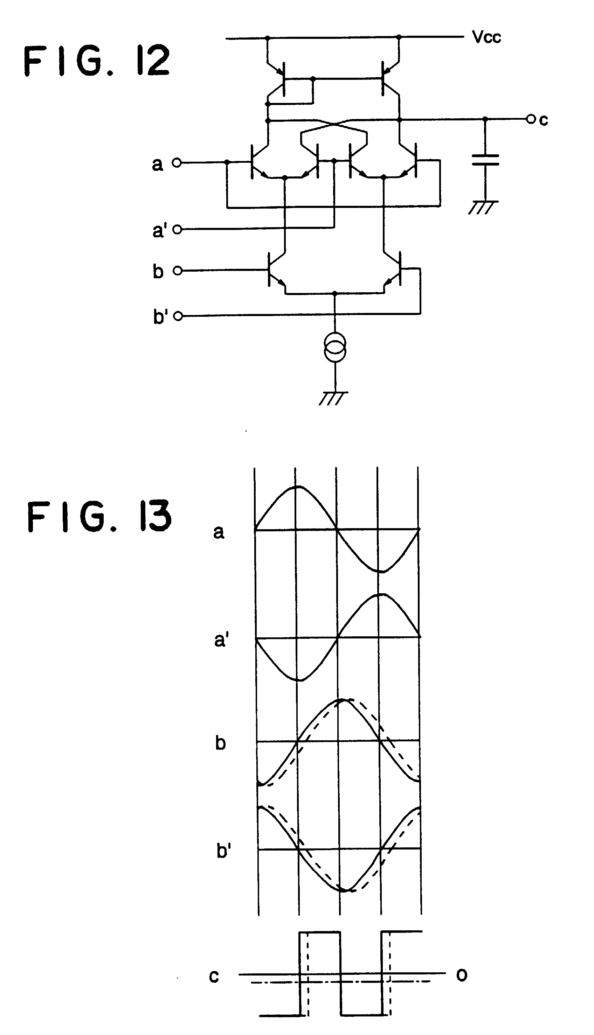

FIG. 12 is a circuit diagram for specifically explaining the phase detector in FIG. 10;

FIG. 13 is a waveform diagram for explaining the relation between input and output voltages of the phase detector in FIG. 10;

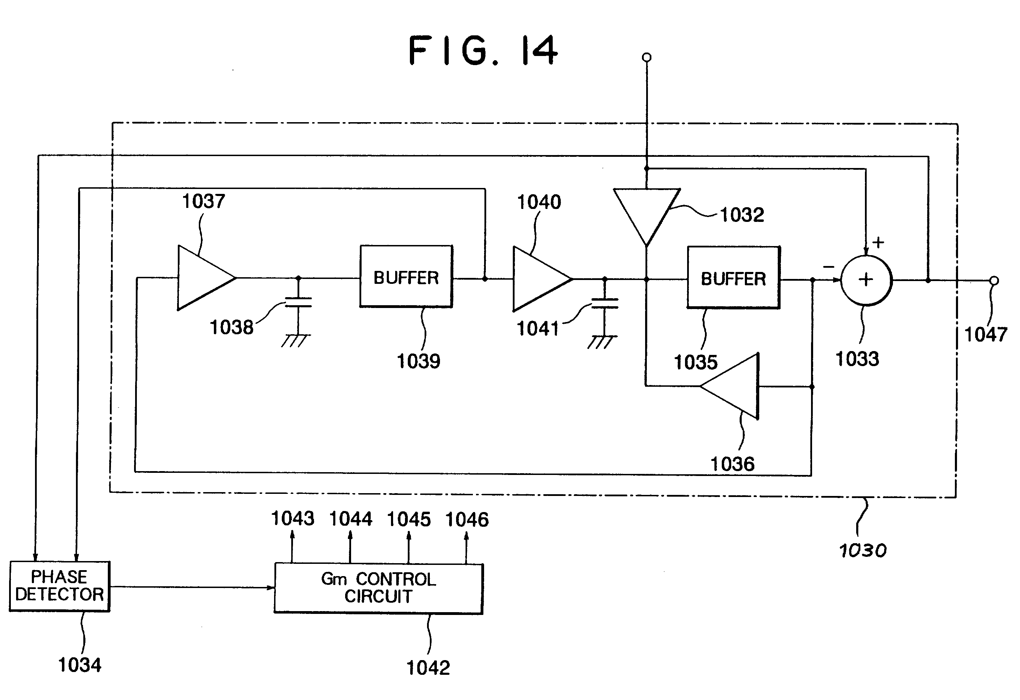

FIG. 14 is a circuit block diagram for explaining still another embodiment of the present invention for automatically adjusting the frequency of an antibell filter;

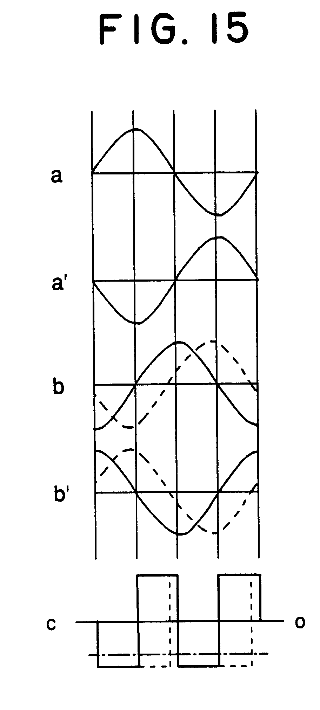

FIG. 15 a waveform diagram for explaining the relation between input and output voltages of the phase detector in FIG. 14;

FIG. 16 is a circuit block diagram for explaining an existing SECAM chroma processing circuit;

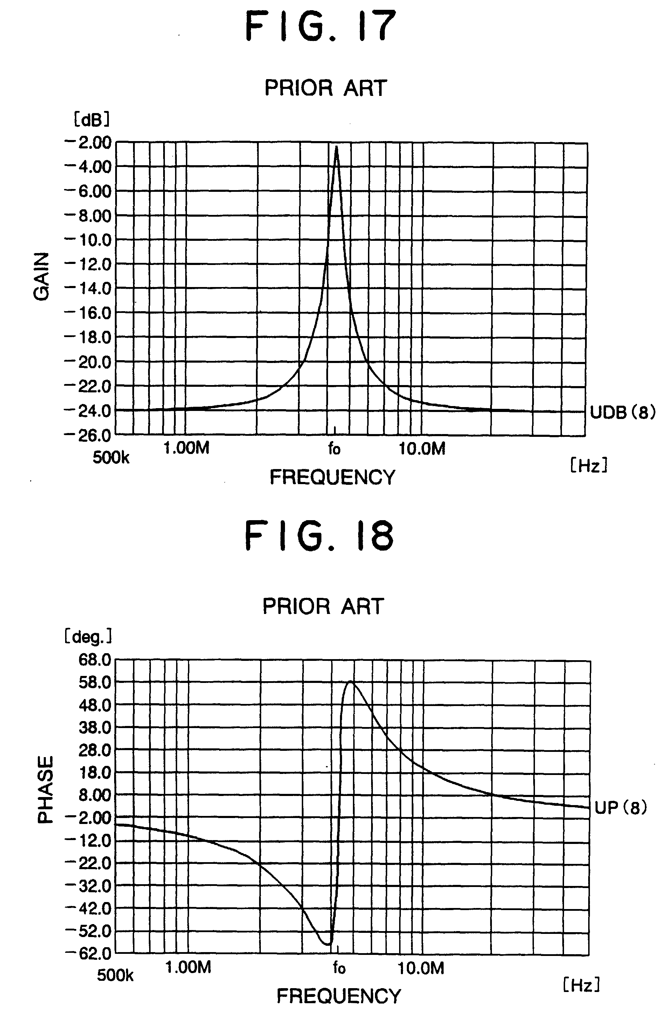

FIG. 17 is a characteristic diagram showing the relation between frequency and gain of a bell filter;

FIG. 18 is a characteristic diagram showing the relation between frequency and phase of a bell filter;

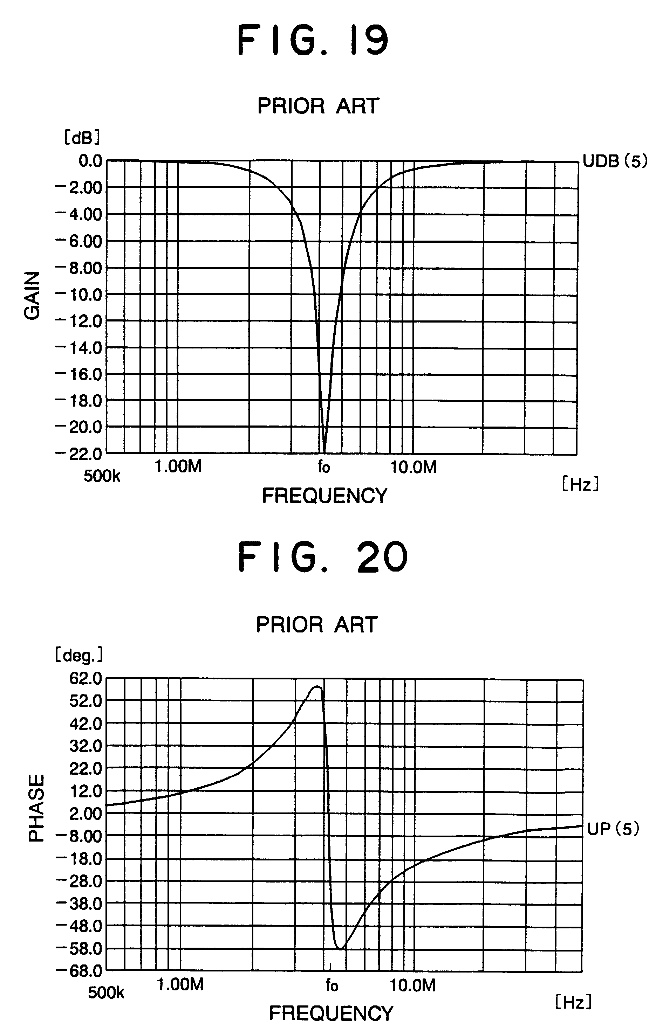

FIG. 19 is a characteristic diagram showing the relation between frequency and gain of an antibell filter;

FIG. 20 is a characteristic diagram showing the relation between frequency and phase of an antibell filter;

FIG. 21 is a circuit diagram of an existing antibell filter;

FIG. 22 is a diagram of an existing system for automatically adjusting the frequency of a filter; and

FIG. 23 is a characteristic diagram showing the relation between frequency and phase of a second-order LPF.

Embodiments of the present invention are described below in detail by referring to the accompanying drawings.

FIG. 1 shows an embodiment of the present invention. First, for recording, a SECAM color television signal inputted from an REC chroma input terminal $IN_1$ is inputted to a 4.3 MHz BPF (Band Pass Filter) 1 through a switch $SW_1$ connected to the R side. The output of the BPF 1 is inputted to a bell filter 3 through a switch $SW_2$ connected to the R side. For recording, the frequency of the bell filter 3 is changed to 4.3 MHz by a frequency changing circuit 2. The output of the bell filter 3 is amplified by a limiter circuit 4. A signal amplified by the limiter circuit 4 is divided by a four-to-one frequency 5. The signal divided by the frequency divider 5 is inputted to a 1.1 MHz BPF 6 through a switch $SW_3$ connected to the R side. The output of the BPF 6 is inputted to an antibell filter 8 through a switch $SW_4$ connected to the R side. For recording, the frequency of the antibell filter 8 is changed to 1.1 MHz by a frequency changing circuit 7. The output of the antibell filter 8 is outputted to a chroma output terminal OUT.

For recording, the 4.3 MHz BPF 1 extracts only the SECAM chroma signal component from the SECAM color television signal supplied to the REC chroma input terminal $IN_1$. At this point of time, the chroma signal amplitude differs depending on the hue because of the effect of the antibell filter 8 at the transmission side. Because the bell filter 3 cancels the effect of the antibell filter 8 at the transmission side, an SECAM chroma FM signal with a constant amplitude can be obtained by the bell filter 3 regardless of the hue. The limiter 4 and frequency divider 5 convert the SECAM chroma FM signal with a constant amplitude into a low frequency (1.1 MHz). The 1.1 MHz BPF 6 removes distortional components produced in low-frequency conversion and suppresses unnecessary band components. Finally, the antibell filter 8 suppresses FM-wave energy nearby the carrier wave frequency similarly to the case of the transmission side. The envelope waveform of the output of the antibell filter 8 becomes apparently same as that of the signal outputted from the REC chroma input terminal $IN_1$. It is possible to decrease the disturbance effect against the FM component of a luminance signal to be synthesized later by the above suppression effect.

For reproduction, an SECAM-type VTR reproduction signal inputted from a PB chroma input terminal $IN_2$ is inputted to the 1.1 MHz BPF 6 through the switch $SW_3$ connected to the P side. The output of the BPF 6 is inputted to the bell filter 3 through the switch $SW_2$ connected to the P side. For reproduction, the central frequency of the bell filter 3 is changed to 1.1 MHz by the frequency changing circuit 2. The output of the bell filter 3 is amplified by the limiter circuit 4. The output of the limiter circuit 4 is inputted to a frequency quadrupler 9. The signal frequency-multiplied by four by the frequency quadrupler 9 is inputted to the 4.3 MHz BPF 1 through the switch $SW_1$ connected to the P side. The output of the BPF 1 is inputted to the antibell filter 8 through the switch $SW_4$ connected to the P side. For reproduction, the central frequency of the antibell filter 8 is changed to 4.3 MHz by the frequency changing circuit 7. The output of the antibell filter 8 is outputted to a chroma output terminal OUT.

For reproduction, the 1.1 MHz BPF 6 extracts the low frequency (1.1 MHz) chroma signal from the SECAM-type VTR reproduction signal supplied to the PB chroma input terminal $IN_2$. The bell filter 3 compensates the effect of the antibell filter 8 applied for recording. The amplitude of the input signal of the bell filter 3 varies depending on the hue. However, because the effect is cancelled for the output of the bell filter 3, the amplitude becomes constant. Strictly saying, the quality Q of an antibell filter for recording may be set to a slightly smaller value deviating from the ideal characteristic so that the amplitude of the output of the bell filter 3 may not completely become constant. However, the following description is made by assuming that the antibell filter has the ideal characteristic. The frequency quadrupler 9 converts the output of the limiter 4 into a high frequency signal (4.3 MHz). The output of the frequency quadrupler 9 contains distortion and unnecessary band components similarly to the case of recording. The 4.3 MHz BPF 1 suppresses and removes the distortion and unnecessary band components. The antibell filter 8 finally suppresses the amplitude of the output of the BPF 1 again and transforms the output into a signal with the same waveform as a transmitted SECAM chroma signal to output it.

The bell filter 3 and the antibell filter 8, as described above, shift the frequencies of these circuits by the frequency changing circuits 2 and 7 for recording and reproduction. As functions, frequencies of the bell filter 3 are changed and automatically adjusted. The function and circuit of this portion are described in detail later.

The bell and antibell filters 3 and 8 can be constituted with analog filter circuits. Concrete examples of the filters are disclosed in Japanese Patent Application Laid-Open Nos. JP-A-3-085808 (1991) and JP-A-3-195208 (1991). For the filters 3 and 8, Q and $\omega_0$ of a transfer function can be determined by gm and capacity. Q can be set by the ratio (product of the gm ratio between gm groups and the ratio between capacity groups) between capacity and gm (voltage-current conversion rate of a differential amplifier or the like) and $\omega_0$ has the dimension of gm/capacity. Because gm depends on current as already known, a method for controlling gm by current is generally used for these filters. Operations of the frequency changing circuits 2 and 7 are further described below by referring to FIGs. 2 and 3. In the case of the bell filter 3, the characteristic for recording is shown by R in FIG. 2 and the central frequency comes to approx. 4.3 MHz. The frequency changing circuit 2 supplies the current providing this characteristic to the bell filter 3.

The characteristic for reproduction, as shown by P in FIG. 2, shows the shape in which Q for recording is left as it is and only the central frequency is decreased to 1.1 MHz. Because the frequency of 1.1 MHz is obtained by dividing 4.3 MHz by four, that is, decreasing from 4 to 1, the frequency changing circuit 2 correspondingly divides the control current information supplied for recording to output it. Because the quality Q is a product of capacity and gm and has the dimension of a constant, it does not change even if the absolute value of gm changes as long as the gm ratio is kept constant. Therefore, the state of P in FIG. 2 can be realized by changing gm while keeping Q constant. Change of gm can very easily be achieved by controlling only the current applied to a gm amplifier for determining $\omega_0$ in the gm amplifier group constituting a built-in filter by the frequency changing circuit 2.

The same technique can also be applied to the case of the antibell filter 8. The filter 8 under the state of P in FIG. 3 for reproduction is used under the state of R for recording. Also in this case, a change can easily be achieved only by applying a correspondingly modified control current. Therefore, the state of P in FIG. 3 can be realized by changing $\omega_0$ while keeping Q constant. Because the transfer functions of bell and antibell are already known, the description of them is omitted here. In the case of the antibell filter, the denominator and numerator of the transfer function replace each other.

In the above description, the built-in filter is controlled by current. However, when an OTA (Operational-Transconductance-Amplifier) known as a MOSFET-C filter is used, the filter is controlled by voltage. In this case, because the frequency changing circuit outputs voltage, it is only necessary to change control voltages so that the frequency changes 4:1. Frequency shift can be realized by a simple circuit both for current and voltage.

In the case of a built-in filter, however, it may not be possible to optionally set an input dynamic range. A signal inputted to the REC chroma input $IN_1$ or PB chroma input $IN_2$ relates to a tuner or electromagnetic conversion for recording or reproduction and the input level fluctuates. Because the output of the 4.3 MHz BPF 1 directly receives the fluctuation, the level to be inputted to the bell filter 3 also fluctuates. When the input dynamic range of the built-in filter is smaller than the fluctuation, the filter characteristic may be deviated from a set characteristic. Therefore attention should be paid to it. In this case, it is necessary to arrange an ACC (Automatic Chroma Control) circuit before the bell filter 3 and the antibell filter 8 so that the chroma signal amplitude to be inputted to the bell filter 3 and antibell filter 8 does not exceed the input dynamic range.

FIG. 4 shows an example in which an ACC loop comprising an ACC amplifier 41 and an ACC detector 42 is constituted between the fixed contact of the switch $SW_2$ at the bell filter 3 side and the bell filter 3. The gain of the ACC amplifier 41 can be controlled by the ACC detector 42 and the ACC detector 42 monitors the input amplitude of the bell filter 3. When the input amplitude of the bell filter 3 reaches a set value or more, the ACC detector 42 outputs control information to the ACC amplifier 41 so as to decrease the gain.

Thus, it is possible to stabilize the chroma signal amplitude inputted to the bell filter 3 in a certain range and remove fluctuation from chroma signals. Because the input of the bell filter 3 is then kept properly and signals ranging from slightly small to large ones can be processed at the same level, it is possible to stabilize the frequency characteristic of the bell filter 3.

The signal level of the ACC detector 42 is detected as the input of the bell filter 3. To cancel the fluctuation of input/output gains of the bell filter 3, however, it is only necessary to use the output side of the bell filter 3 as the input side of the ACC detector 42.

Automatic adjustment is described below by referring to FIGs. 5 and 6.

The central frequency of the bell filter 3 is just 4.286 MHz as described above and this signal is not present in incoming chroma signals. Therefore, an embodiment for generating reference signals internally is described below by referring to FIG. 5. A reference signal generating circuit 51 generates a 4.286 MHz signal with a high accuracy by using a crystal or the like. A switch $SW_5$ is newly set between the 4.3 MHz BPF 1 and the switch $SW_1$. The first preference signal $f_1$ of the reference signal generating circuit 51 is inputted to an input terminal A. A four-to-one frequency divider 52 generates a second reference signal $f_2$ obtained by frequency-dividing the first reference signal $f_1$. The output terminal of the frequency-divider 52 is connected to the input terminal A of a switch $SW_6$ set between the switch $SW_3$ and the 1.1 MHz BPF. The switches $SW_5$ and $SW_6$ are driven by a key pulse KP. Because there is no chroma signal in the vertical retrace line period, the key pulse KP uses a pulse in any period close to the vertical synchronization period. The switches $SW_5$ and $SW_6$ are set to the side of the signals $f_1$ and $f_2$ to introduce the reference signals $f_1$ and $f_2$ into the BPFs 1 and 6 respectively. Because the reference signals are thus connected to the BPFs 1 and 6 respectively, the signals $f_1$ and $f_2$ are supplied to the bell filter 3 and the antibell filter 8 which are respectively located after the BPFs 1 and 6. Therefore, the reference signals can be inputted to the bell filter 3 and antibell filter 8.

The automatic adjustment system for each filter is described below by referring to FIG. 6. A reference at the nominal central frequency signal introduced into a bell filter 60 (corresponding to the bell filter 3 in FIG. 1) is also supplied to a phase comparator 61. A signal at a point where the phase of the central frequency shifts by 90° is fetched from the internal circuit of the bell filter 60 and supplied to the input terminal of the phase comparator 61. The phase comparator 61 is driven by the key pulse KP so that it operates only for the key pulse period. The result of phase comparison is smoothed by a capacitor $C_1$ and supplied to a voltage-current converter 62. According to the phase comparison result which is current-converted by the converter 62, the current gain is changed to 1 or 1/4 by a current changing circuit 63. Change of current gains is driven by a recording/reproducing mode signal. The bell filter 60 is driven by the current signal which changed gains to apply feedback.

When the central frequency of the bell filter 60 deviates from 4.286 MHz, a signal appearing at a 90-phase-signal output terminal deviates from 90° for the reference signal. The phase comparator 61 detects the deviation and charges the capacitor $C_1$ (or make the capacitor $C_1$ discharge). Then, the current value for controlling the filter changes and controls the signal appearing at the 90°-phase-signal output terminal to make the signal converge to 90°. When the control finally converges, the 90°-phase terminal signal of the bell filter 60 accurately comes to 90° for the reference signal and the central frequency is accurately adjusted to the reference signal or 4.286 MHz. The same is also applied to the antibell filter 8. That is, a central frequency accurately equal to the reference signal can be obtained by fetching a signal from a point where the phase shifts by 90° and by comparing phases.

In FIG. 5, because signals supplied to the bell filter 3 and antibell filter 8 are different in frequency from each other, the second reference signal which is 1/4 the frequency of the first reference signal is generated by the frequency divider 52 and supplied to the filters 3 and 8. The reference signal generating circuit 51 and the four-part-divider 52 are generally constituted with pulse circuits so that the reference signals frequently become rectangular. In this case, when directly applying the reference signal to the bell filter 3 and antibell filter 8, an error occurs due to the harmonic components of the reference signals and the adjustment accuracy is degraded. To avoid this, switches SW5 and SW6 are set to the inputs of the BPFs 1 and 6 respectively, so that the reference signals $f_1$ and $f_2$ pass through the BPFs 1 and 6. Thus, it is possible to suppress the harmonics of the reference signals and input reference signals with less harmonic distortion to the bell and antibell filters by using the current BPFs in common without increasing the number of BPFs.

This embodiment makes it possible to input a reference signal operating at its frequency and having less harmonic distortion to the bell and antibell filters, as described above, and there is an advantage that it is unnecessary to add a BPF-output changing circuit by merely inputting the reference signals to the existing BPFs. In FIG. 2, for example, the bell filter operates at 4.3 MHz for recording and is supplied with the output signal of the 4.3 MHz BPF 1 via the switch $SW_2$. For reproduction, the bell filter is operated at 1.1 MHz and is supplied with the output signal of the 1.1 MHz BPF 6. In this case, as the switch $SW_2$ is set to the 1.1 MHz BPF 6 side, the reference signal passing through the BPF 6 is supplied to the bell filter 3. This procedure is also applied to the antibell filter 8.

The embodiment described above is a method for inputting an automatic adjustment signal to each filter. However, there are two other methods which are described below without illustrating them. In the case of the insertion method in FIG. 5, two reference signals are used and at the same time, the reference signals with the desired frequencies are inputted to bell and antibell filters. However, because division and multiplication of frequencies are performed for recording or reproduction, either reference signal can also be generated in a signal path.

The first method is a method of using only a 4.286 MHz reference signal, in which a reference signal is supplied to the input of the 4.3 MHz BPF filter 1 during the key pulse period by the switch $SW_5$ in FIG. 5. In this case, the switch $SW_6$ and the four-to-one frequency divider 52 in FIG. 5 are not used and the switches $SW_1$ to $SW_4$ are all set to the recording position. Then, the output of the 4.3 MHz BPF 1 is introduced into the bell filer 3. The reference signal passing through the bell filter 3 passes through the frequency divider 5, the distortion of the signal is removed by the 1.1 MHz BPF 6, and the signal reaches the antibell filter. Because the antibell filter 8 receives the reference signal (after frequency division by four) from the switch $SW_4$, separately generating the reference signal $f_2$ in FIG. 5 is unnecessary.

The second method is a method of using only a 1.0715 MHz reference signal, unlike the first method. In this case, the reference signal generating circuit 51 generates a signal of approx. 1.1 MHz, the dividing stage 52 can be omitted. The reference signal is supplied to the input of the 1.1 MHz BPF 6 by the switch $SW_6$ in FIG. 5 during the key pulse period. In this case, the switches $SW_1$ to $SW_4$ are all set to the reproduction position without using the switch $SW_5$. Then, the output of the 1.1 MHz BPF 6 is supplied to the bell filter 3, the output signal from bell filter 3 passes through the frequency quadrupler 9 and the 4.3 MHz BPF 1 to suppress the distortion, and reaches the antibell filter 8. Because the bell filter 3 can be automatically adjusted by the signal, separate generation of the reference signal $f_1$ in FIG. 5 is unnecessary.

The above two methods omit the dividing stage 52 for reference signal generation.

In the above description, an oscillator using a crystal or the like is used as a reference signal generating source. In the case of multichroma processing, a crystal for a color sub-carrier wave is used for PAL/NTSC. Therefore, the case of using this is described below.

In view of frequency, the crystal of PAL has the frequency of 4.43361875 MHz which is close to the central frequency of the bell filter. Therefore, the case of using this is described below. A frequency-changing circuit may use a DAC (digital-to-analog converter) instead of using a simple voltage-to-current converter circuit for control information. To adjust the central frequency of a bell filter with the reference signal of PAL frequency, the DAC is set to a certain value, the reference current of the DAC is controlled by the output of the phase comparator, and the DAC output current is supplied to the bell filter.

Under the above state, the central frequency of the bell filter comes to the PAL frequency. Therefore, when adjustment is completed and a chroma signal is made to pass, the DAC data can be changed and the central frequency of the bell can be shifted. Because an example of this system is disclosed in Japanese Patent Publication No. JP-A-4-225640 (1992) by the applicant of the present invention, its detailed description is omitted. It is possible to perform a frequency shift of 4:1 with data and use the frequency change of 4:1 and the shift by DAC together.

FIG. 7 is a system diagram for explaining another embodiment of the present invention. This embodiment makes it possible to shift BPF frequencies similarly to the case of bell and antibell filters.

In FIG. 7, an SECAM color television signal supplied from the REC chroma input terminal $IN_1$ is supplied to a 4.3 MHz/1.1 MHz BPF 71 which uses 4.3 MHz for recording through a switch $SW_7$. The output of the BPF 71 is supplied to a 4.3 MHz/1.1 MHz bell filter 72, amplified by a limiter circuit 73, and frequency-divided by four by a frequency divider 74, and thereafter supplied to a 1.1 MHz/4.3 MHz antibell filter 76, which uses 1.1 MHz for recording, through a switch $SW_8$. The output of the BPF 75 is filtered through the 1.1 MHz/4.3 MHz antibell filter 76 and thereafter outputted from the chroma output terminal OUT.

In case of reproduction , an SECAM color television signal supplied from the PB chroma input terminal $IN_2$ is supplied to a 1.1 MHz BPF 71 and inputs the chroma component to bell filter 72 through switch $SW_7$. The signal is amplified by a limiter circuit 73, frequency-divided by four by a frequency divider 74, and is supplied to a 4.3 MHz/1.1 MHz bell filter 75, through switch $SW_8$ and thereafter supplied to 4.3 MHz antibell filter 76 and outputted through the 4.3 MHz antibell filter 76 from the chroma output terminal OUT.

The BPFs 71 and 75 and the bell filter 72 and antibell filter 76 are connected to frequency changing circuits 78 and 79 to perform frequency shift and automatic adjustment with a control signal supplied to the control terminal P/R for recording/reproduction.

Thus, because signals are processed completely in one direction, it is possible to decrease the cross-talk between recording and reproducing signals or between frequency bands. Moreover, it is possible to decrease the number of pins by disusing the switch $SW_7$ and using one pin for REC/PB chroma input terminals $IN_1$ and $IN_2$.

As described above, the SECAM chroma processing circuit of the present invention makes it possible not only to incorporate filters into an IC but also to omit the adjustment of the filters.

The following is the description of still another embodiment.

This embodiment makes it possible to detect a phase by noticing the transfer function of an antibell filter and giving a characteristic for rotating a phase by 90° to a circuit constituting the antibell filter.

First, as shown in FIG. 8, an antibell filter is constituted by subtracting a certain transfer function H(s) from an input signal. In FIG. 8, symbol 810 represents an input terminal, 811 represents an output terminal, 812 represents a filter of a certain transfer function H(s), and 813 represents a subtracter.

When the transfer function of an antibell filter is assumed as AB(s) and a certain transfer function is assumed as H(s), H(s) can be shown as the following expression (10).

$$H(s)= 1-AB(s)= \frac{(\frac{1}{Q_n} - \frac{1}{Q_p})\omega_0 S}{S^2+\frac{1}{Q_n}\cdot\omega_0 S+\omega_0^2} \tag{10}$$

H(s) is the transfer function of a BPF. In this case, the BPF is transformed into the expression (11) by assuming input as X and output as Y.

$$X(\frac{1}{Q_n} - \frac{1}{Q_p})\omega_0 S = Y(S^2+\frac{1}{Q_n}\cdot\omega_0 S+\omega_0^2) \tag{11}$$

It is found that components are the first-order integration term of input, the second-order integration term of output, and the first-order integration term of output. This is shown in FIG. 9. In FIG. 9, symbol 920 represents an input terminal, 921 represents an output terminal, 922 to 924 represent Gm amplifiers, 925 to 927 represent capacitors, and 928 represents an adder.

In this case, it is noticed that the first-order integration term of BPF is also obtained only by constituting the transfer function of BPF. That is, it is possible to obtain the transfer function of the second-order LPF shown in the following expression (12) at the point A.

$$\frac{(\frac{1}{Q_n} - \frac{1}{Q_p})\omega_0 S}{S^2 + \frac{1}{Q_n} \cdot \omega_0 S + \omega_0^2} \cdot \frac{\omega_0}{S} = \frac{(\frac{1}{Q_n} - \frac{1}{Q_p})\,\omega_0^2}{S^2 + \frac{1}{Q_n} \cdot \omega_0 S + \omega_0^2} \tag{12}$$

Fig. 10 shows an embodiment of the present invention which makes it possible to automatically adjust the frequency of an antibell filter 1030 with a constitution of [1-(transfer function of a BPF)]. In FIG. 10, symbol 1031 represents an input terminal to which an input signal is inputted. The input terminal 1031 is connected to the input of a Gm amplifier 1032, one input of a subtracter 1033, and one input of a phase detector 1034. The output of the Gm amplifier 1032 is connected to the other input of the subtracter 1033 through a buffer 1035 and also connected to the inputs of Gm amplifiers 1036 and 1037. The output of the Gm amplifier 1036 is connected to the input of the buffer 1035. The output of the Gm amplifier 1037 is grounded through a capacitor 1038 and simultaneously connected to the input of a buffer 1039. The output of the buffer 1039 is connected to the input of a Gm amplifier 40 and also connected to the other input of the phase detector 1034. The output of a Gm amplifier 1040 is grounded through a capacitor 1041 and simultaneously connected to the input of the buffer 1035. The output of the phase detector 1034 is connected to the input of a Gm control circuit 1042. A control output 1043 of the Gm control circuit 1042 is connected to the control terminal of the Gm amplifier 1037, a control output 1044 of it is connected to the control terminal of the Gm amplifier 1040, a control output 1045 of it is connected to the control terminal of the Gm amplifier 1032, and a control output 1046 of it is connected to the control terminal of the Gm amplifier 1036. The output of the subtracter 1033 is connected to an output terminal 1047.

Operation of the system in FIG. 10 is described below. First, a case is considered in which the central frequency $f_0$ of the antibell filter to be controlled equals 4.286 MHz. In this case, the phase of the output signal of the secondary LPF has the characteristic shown by B in FIG. 11. The phase of the output of the second-order LPF having the input signal of 4.286 MHz rotates by 90° to the input signal.

The operation of the phase detector 1034 is described below by referring to FIG. 12 which shows a concrete example of the phase detector 1034. Input terminals are shown by a, a', b, and b' and an output terminal is shown by c. When assuming a signal inputted to the input terminal 1031 in FIG. 10 as a differential signal of 4.286 MHz (same frequency as $f_0$ of the antibell filter), the voltage waveforms at the input and output solid of the phase detector 1034 are shown by the continuous lines in FIG. 13. Because the phases of the signals inputted to the input terminals b and b' are rotated by 90° from those of the signals inputted to the input terminals a and a', the duty of the output waveform c comes to 50% and the average value of the waveform comes to 0.

When the Gm control circuit 1042 shown in FIG. 10 controls the Gm amplifiers 1032, 1036, 1037, and 1040 respectively in accordance with the average value of the phase detector 1034, Gm of each Gm amplifier does not change because the average value of output voltages is 0. That is, the state is realized in which $f_0$ equals 4.286 MHz.

Then, a case is considered in which $f_0$ of the antibell filter equals 5 MHz. When a signal of 4.286 MHz is inputted to the antibell filter, the phase of the output signal of the second-order LPF comes to "-90°+{-90°-(-68°)}=-112°". Therefore, the phase rotates by 112° to the input signal.

In this case, the voltage waveform in the phase detector 1034 is shown by a broken line in FIG. 13. The duty of the output waveform c is out of 50% and the average value of the waveform becomes negative. That is, this voltage makes it possible to control the Gm amplifiers 1032, 1036, 1037, and 1040 and decrease $f_0$ of the antibell filter.

FIG. 14 is a circuit block diagram for explaining another embodiment of the present invention which makes it possible to automatically adjust the frequency of an antibell filter 1030 with the constitution of [1-(transfer function of a BPF)].

The embodiment in FIG. 14 is different from the embodiment described in FIG. 10 in that the point from which the signal inputted to the phase detector 1034 is fetched is changed. In FIG. 10, the input signal of the antibell filter and the output signal of the secondary LPF are inputted to the phase detector 1034. In FIG. 14, however, the second-order LPF output signal and the antibell-filter output signal are inputted to the phase detector 1034. FIG. 11 shows these phase characteristics. In FIG. 11, symbol A represents the phase characteristic at the output terminal of the antibell filter and B represents the phase characteristic at the output terminal of the second-order LPF. Therefore, symbol C represents the phase difference between A and B. From the characteristic C, it is found that a characteristic steeply rising at the point $f_0$ is obtained.

When assuming the phase of a signal at the output terminal of the antibell filter to be standard, the input phase difference between a and a' on one hand and b and b' on the other of the phase detector 1034 comes to "-90°+{-90°-(-13°)}=-167°". The then input and output voltage waveforms of the phase detector 1034 are shown by broken lines in FIG. 15. Because the average value of the voltage waveform c gets larger than that in the case of FIG 10, the control capacities of the Gm amplifiers 1032, 1036, 1037, and 1040 are improved. That is, this embodiment makes it possible to realize an accurate automatic frequency adjusting system compared with the system in FIG. 10.

As described above, the automatic frequency adjusting circuit of the present invention makes it possible to automatically and very accurately adjust the central frequencies of bell and antibell filters built in an IC. Moreover, it is possible to prevent element characteristics from deteriorating with age.

**Claims**

1. A SECAM chroma processing circuit having, for operation in a first

mode for extracting a chroma signal from a first input SECAM signal, first filter means (1) for extracting a chroma signal from said first input SECAM signal;
bell filter means (3) having a bell-type transmission gain characteristic and receiving said extracted chroma signal;
means (5) for frequency-dividing by four the signal passed through said bell filter means (3);
second filter means (6) for extracting a desired component from the frequency-divided signal;
antibell filter means (8) having an inverted bell-type transmission gain characteristic and arranged to receive the extracted signal from said second filter means to form a first, antibell-filtered, output signal;

said circuit having, for operation in a second mode for extracting a chroma signal from a second input signal,

second filter means (6) for extracting a chroma signal from said second input signal;
means (SW3, SW2) for exclusively passing said second input signal through said second filter means (6) for extracting a chroma signal from said second input signal, and thereafter through said bell filter means (3);
means (9) for frequency-multiplying the signal passed through said bell-filter means;
means (SW1, SW4) for exclusively passing the frequency-multiplied signal through said first filter means (1) and said antibell filter means (3) to obtain a second output signal;
wherein the transmission characteristics of said bell filter means (3) and said antibell filter means (8) can be frequency-shifted by frequency shifting control means (2, 7) provided in said circuit;
wherein in said first mode the transmission characteristic of said bell filter means (3) has its central frequency shifted to a centre frequency of said first input SECAM signal, and the transmission characteristic of said antibell filter means (8) has its central frequency shifted to a centre frequency of said first output signal which centre frequency corresponds to a centre frequency of said second input signal; and
wherein in said second mode the transmission characteristic of said bell filter means (3) has its central frequency shifted to said centre frequency of said second input signal, and the transmission characteristic of said antibell filter means (8) has its central frequency shifted to said centre frequency of said second output signal which centre frequency corresponds to said centre frequency of said first input SECAM signal.

2. The SECAM chroma processing circuit of claim 1, wherein automatic chroma control circuits (41 and 42) are arranged before at least one of said bell filter means (3) and said antibell filter means.

3. The SECAM chroma processing circuit of claim 1, wherein the bell filter means (3) or the antibell filter means (8) is constituted with an active filter capable of controlling frequency characteristics with current or voltage, and wherein in the filters, central frequencies are changed by said frequency shifting control means (2, 7).

4. A SECAM chroma processing circuit having, for operation in a first

mode for extracting a chroma signal from a first input SECAM signal, first filter means (71) for extracting a chroma signal from said first input SECAM signal;
bell filter means (72) having a bell-type transmission gain characteristic and receiving said extracted chroma signal;
means (74) for frequency-dividing by four the signal passed through said bell filter means (72);
second filter means (75) for extracting a desired component from the frequency-divided signal;
antibell filter means (76) having an inverted bell-type transmission gain characteristic and arranged to receive the extracted signal from said second filter means to form a first, antibell-filtered, output signal;

said circuit having, for operation in a second mode for extracting a chroma signal from a second input signal,

said first filter means (71) arranged for extracting a chroma signal from said second input signal;

said bell filter means (72) arranged for receiving said extracted chroma signal;

means (77) for frequency-multiplying by four the signal passed through said bell-filter means;

said second filter means (75) arranged for extracting a desired component from the frequency-multiplied signal;

said antibell filter means (76) arranged to receive the extracted signal from said second filter means to form a second, antibell-filtered, output signal;

wherein the transmission characteristics of said bell filter means (72), said antibell filter means (76), said first filter means (71) and said second filter means (75) can be frequency-shifted by frequency shifting control means (78, 79) provided in said circuit;

wherein in said first mode the transmission characteristics of said bell filter means (72) and said first filter means (71) have their central frequencies shifted to the centre frequency of said first input SECAM signal, and the transmission characteristics of said antibell filter means (76) and said second filter means (75) have their central frequencies shifted to a centre frequency of said first output signal which centre frequency corresponds to the centre frequency of said second input signal; and

wherein in said second mode the transmission characteristics of said bell filter means (72) and said first filter means (71) have their central frequencies shifted to said centre frequency of said second input signal, and the transmission characteristics of said antibell filter means (76) and said second filter means (75) have their central frequencies shifted to said centre frequency of said second output signal which centre frequency corresponds to said centre frequency of said first input SECAM signal.

5. The SECAM chroma processing circuit of claim 4, comprising a chroma signal input terminal selector (SW$_7$) shared by said first and second modes.

6. The SECAM chroma processing circuit of claim 1, comprising

a reference signal generating means (51, 52) for generating a plurality of reference signals having respective predetermined reference frequencies (f1, f2);

means (SW5, SW6) for simultaneously and exclusively feeding a first one of said reference signals to said bell filter means (3), and a second one of said reference signals to said antibell filter means (8), within the vertical retrace period of said SECAM signal;

means (61) for comparing the phase of said first reference signal with a phase of said first reference signal within said bell filter means, and for comparing the phase of said second reference signal with a phase of said second reference signal within said antibell filter means, for detecting whether the respective phase differences deviate from respective reference value;

feedback means (62, 63) for controlling the central frequencies of said bell and antibell filter means in response to the deviations of the respective ones of said phase differences detected by said means for comparing, so as to make the phase differences converge to a predetermined value;

means for holding said central frequencies at their respective values obtained by said controlling, in a time period other than said vertical retrace period.

7. The SECAM chroma processing circuit of claim 1, comprising

reference signal generating means for generating a single reference signal having a predetermined reference frequency;

switch means for supplying said single reference signal to said bell filter means (3) within the vertical retrace period of said SECAM signal;

means for fixing said means (SW1-SW4) for exclusively passing in a position corresponding to said first mode at least during supplying said single reference signal;

means (61) for comparing the phase of said single reference signal with a phase of said single reference signal within said bell filter means, and for comparing the phase of a second reference signal, consisting of said single reference signal as processed prior to being supplied to said antibell filter means, with a phase of said second reference signal within said antibell filter means, for detecting whether the respective detected phase differences deviate from respective reference values;

feedback means (62, 63) for controlling the central frequencies of said bell and antibell filter means in response to the deviations of the respective ones of said phase differences detected by said means for comparing, so as to make the phase differences converge to respective predetermined values;

means for holding said central frequencies at their respective values obtained by said controlling, in a time period other than said vertical retrace period.

8. The SECAM chroma processing circuit of claim 1, comprising

reference signal generating means for generating a single reference signal having a predetermined reference frequency;

switch means for supplying said single reference signal to said antibell filter means (8) within the vertical retrace period of said SECAM signal:

means for fixing said means (SW1-SW4) for exclusively passing in a position corresponding to said second mode at least during supplying said single reference signal;

means (61) for comparing phase of said single reference signal with a phase of said single reference signal within said antibell filter means, and for comparing the phase of a second reference signal, consisting of said single reference signal as processed prior to being supplied to said bell filter means, with a phase of said second reference signal within said bell filter means, for detecting whether the respective detected phase differences deviate from respective reference values;

feedback means (62, 63) for controlling the central frequencies of said bell and antibell filter means in response to the deviations of the respective ones of said phase differences detected by said means for comparing, so as to make the phase differences converge to respective predetermined values;

means for holding said central frequencies at their respective values obtained by said controlling, in a time period other than said vertical retrace period.

9. The SECAM chroma processing circuit of claim 6 to 8, wherein

said reference signal is fed into said bell filter (8) or said antibell filter (8) by switching input terminals of said first and second filter means (1, 6) for extracting said chroma signal arranged before said bell filter (3) or said antibell filter (8).

10. The SECAM chroma processing circuit of claim 6 to 8, wherein said feedback means (62, 63) comprise

means (62) for generating control currents determined to make said phase differences converge; and

means (63) for changing said control currents in accordance with said modes (P/R).

## Patentansprüche

1. SECAM-Chrominanzsignal-Verarbeitungsschaltung, welche zum Betrieb in einem ersten Modus zum Extrahieren eines Chrominanzsignals von einem ersten SECAM-Eingabesignal aufweist:

eine erste Filtereinrichtung (1) zum Extrahieren eines Chrominanzsignals aus dem ersten SECAM-Eingabesignal;

eine Glockenfiltereinrichtung (3) mit einer glockenartigen Übertragungsverstärkungs-Charakteristik zum Empfangen des extrahierten Chrominanzsignals;

eine Einrichtung (5) zum Frequenzteilen des durch die Glockenfiltereinrichtung (3) durchgelassenen Signals durch vier;

eine zweite Filtereinrichtung (6) zum Extrahieren einer erwünschten Frequenzkomponente von dem frequenzgeteilten Signal;

eine Antiglockenfiltereinrichtung (8) mit einer inversen glockenartigen Übertragungsverstärkungs-Charakteristik, welche zum Empfangen des extrahierten Signals von der zweiten Filtereinrichtung zum Bilden eines ersten Antiglocken-gefilterten Ausgangssignals gebildet ist;

wobei die Schaltung zum Betrieb in einem zweiten Modus zum Extrahieren eines Chrominanzsignals von einem zweiten Eingabesignal aufweist:

eine zweite Filtereinrichtung (6) zum Extrahieren eines Chrominanzsignals von dem zweiten Eingabesignal;

eine Einrichtung (SW3, SW2) zum ausschließlichen Durchlassen des zweiten Eingabesignals durch die zweite Filtereinrichtung (6) zum Extrahieren eines Chrominanzsignals von dem zweiten Eingabesignal und danach durch die Glockenfiltereinrichtung (3);

eine Einrichtung (9) zum Frequenzmultiplizieren des durch die Glockenfiltereinrichtung durchgelassenen Signals;

eine Einrichtung (SW1, SW4) zum ausschließlichen Durchlassen des frequenzmultiplizierten Signals durch die erste Filtereinrichtung (1) und die Antiglockenfiltereinrichtung (3) zum Erhalten eines zweiten Ausgabesignals;

wobei die Übertragungscharakteristika der Glockenfiltereinrichtung (3) und der Antiglockenfiltereinrichtung (8) durch eine Frequenzverschiebe-Steuereinrichtung (2, 7), welche in der Schaltung vorgesehen ist, frequenzverschoben werden können;

wobei in dem ersten Modus die Übertragungscharakteristik der Glockenfiltereinrichtung (3) ihre Zentralfrequenz zu einer Zentralfrequenz des ersten SECAM-Eingabesignals verschoben hat und die Übertragungscharakteristik der Antiglockenfiltereinrichtung (8) ihre Zentralfrequenz auf eine Zentralfrequenz des ersten Ausgabesignals verschoben hat, wobei die Zentral frequenz einer Zentralfrequenz des zweiten Eingabesignals entspricht; und

wobei in dem zweiten Modus die Übertragungscharakteristik der Glockenfiltereinrichtung (3) ihre Zentralfrequenz auf die Zentralfrequenz des zweiten Eingabesignals verschoben hat und die Übertragungscharakteristik der Antiglockenfiltereinrichtung (8) ihre Zentral frequenz auf die Zentralfrequenz des zweiten Ausgabesignals verschoben hat, wobei die Zentral frequenz der Zentralfrequenz des ersten SECAM-Eingabesignals entspricht.

2. SECAM-Chrominanzsignal-Verarbeitungsschaltung nach Anspruch 1, wobei automatische Chrominanzsignal-Steuerschaltungen (41 und 42) vor zumindest einer der Glockenfiltereinrichtung (3) bzw. der Antiglockenfiltereinrichtung angeordnet sind.

3. SECAM-Chrominanzsignal-Verarbeitungsschaltung nach Anspruch 1, wobei die Glockenfiltereinrichtung (3) oder die Antiglockenfiltereinrichtung (8) mit einem aktiven Filter aufgebaut ist, welcher die Frequenzcharakteristika mit Strom oder Spannung steuern kann, und wobei die Zentralfrequenzen der Filter durch die Frequenzverschiebe-Steuereinrichtungen (2, 7) veränderbar sind.

4. SECAM-Chrominanzsignal-Verabeitungsschaltung, welche zum Betrieb in einem ersten Modus zum Extrahieren eines Chrominanzsignals von einem ersten SECAM-Eingabesignal aufweist:

eine erste Filtereinrichtung (71) zum Extrahieren eines Chrominanzsignals von dem ersten SECAM-Eingabesignal;

eine Glockenfiltereinrichtung (72) mit einer glockenartigen Übertragungsverstärkungs-Charakteristik zum Empfangen des extrahierten Chrominanzsignals;

eine Einrichtung (74) zur Frequenzteilung des durch die Glockenfiltereinrichtung (72) durchgelassenen Signals durch vier;

eine zweite Filtereinrichtung (75) zum Extrahieren einer erwünschten Komponente von dem frequenzgeteilten Signal;

einer Antiglockenfiltereinrichtung (76) mit einer invertierten glockenartigen Übertragungsverstärkungs-Charakteristik, welche zum Empfangen des extrahierten Signals von der zweiten Filtereinrichtung zum Bilden eines ersten Antiglocken-gefilterten Ausgabesignals gestaltet ist;

wobei die Schaltung zum Betrieb in einem zweiten Modus zum Extrahieren eines Chrominanzsignals von einem zweiten Eingabesignal aufweist:

die erste Filtereinrichtung (71), welche zum Extrahieren eines Chrominanzsignals von dem zweiten Eingabesignal gestaltet ist;

die Glockenfiltereinrichtungen (72), welche zum Empfangen des extrahierten Chrominanzsignals gestaltet ist;

einer Einrichtung (77) zum Frequenzmultiplizieren des durch die Glockenfiltereinrichtung durchgelassenen Signals mal vier;

wobei die zweite Filtereinrichtung (75) zum Extrahieren einer erwünschten Komponente von dem frequenzmultiplizierten Signal gestaltet ist;

wobei die Antiglockenfiltereinrichtung (76) zum Empfangen des extrahierten Signals von der zweiten Filtereinrichtung zum Bilden eines zweiten Antiglocken-gefilterten Ausgabesignals gestaltet ist;

wobei die Übertragungscharakteristika der Glockenfiltereinrichtung (72), der Antiglockenfiltereinrichtung (76), der ersten Filtereinrichtung (71) und der zweiten Filtereinrichtung (75) durch eine Frequenzverschiebe-Steuereinrichtung (78, 79), welche in der Schaltung vorgesehen ist, frequenzverschiebbar sind;

wobei in dem ersten Modus die Übertragungscharakteristika der Glockenfiltereinrichtung (72) und der ersten Filtereinrichtung (71) ihre Zentralfrequenzen auf die Zentralfrequenz des ersten SECAM-Eingabesignals verschoben haben und die Übertragungscharakteristik der Antiglockenfiltereinrichtung (76) und die zweite Filtereinrichtung (75) ihre Zentralfrequenzen zu einer Zentralfrequenz des ersten Ausgabesignals verschoben haben, wobei die Zentral frequenz der Zentral frequenz des zweiten Eingabesignals entspricht; und

wobei in dem zweiten Modus die Übertragungscharakteristika der Glockenfiltereinrichtung (72) und der ersten Filtereinrichtung (71) ihre Zentralfrequenzen auf die Zentralfrequenz des zweiten Eingabesignals verschoben haben und die Übertragungscharakteristika der Antiglockenfiltereinrichtung (76) und der zweiten Filtereinrichtung (75) ihre Zentralfrequenzen auf die Zentralfrequenz des zweiten Ausgabesignals verschoben haben, wobei die Zentralfrequenz der Zentralfrequenz des ersten SECAM-Eingabesignals entspricht.

5. SECAM-Chrominanzsignal-Verarbeitungsschaltung nach Anspruch 4 mit einem Chrominanzsignal-Eingabeanschluß-selektor (SW$_9$), welcher von dem ersten und zweiten Modus geteilt wird.

6. SECAM-Chrominanzsignal-Verabeitungsschaltung nach Anspruch 1 mit:

einer Referenzsignal-Erzeugungseinrichtung (51, 52) zum Erzeugen einer Vielzahl von Referenzsignalen mit jeweiligen vorbestimmten Referenzfrequenzen (f1, f2);

einer Einrichtung (SW5, SW6) zum simultanen und ausschließlichen Zuführen eines ersten der Referenzsignale an die Glockenfiltereinrichtung (3) und eines zweiten der Referenzsignale an die Antiglockenfiltereinrichtung (8) innerhalb der vertikalen Rückspurperiode des SECAM-Signals;

einer Einrichtung (61) zum Vergleichen der Phase des ersten Referenzsignals mit einer Phase des ersten Referenzsignals innerhalb der Glockenfiltereinrichtung und zum Vergleichen der Phase des zweiten Referenzsignals mit einer Phase des zweiten Referenzsignals innerhalb der Antiglockenfiltereinrichtung zum Erfassen, ob jeweilige Phasendifferenzen von einem jeweiligen Referenzwert abweichen;

einer Rückkopplungseinrichtung (62, 63) zum Steuern der Zentralfrequenzen der Glocken- und Antiglockenfiltereinrichtung ansprechend auf die Abweichungen der jeweiligen Phasendifferenzen, welche von der Vergleichseinrichtung erfaßt werden, um die Phasendifferenzen auf einen vorbestimmten Wert konvergieren zu lassen; und

einer Einrichtung zum Halten der Zentralfrequenzen an ihren jeweiligen Werten, welche durch das Steuern in einer Zeitperiode, welche von der vertikalen Rückspurperiode verschieden ist, erhalten werden.

7. SECAM-Chrominanzsignal-Verarbeitungsschaltung nach Anspruch 1 mit:

einer Referenzsignal-Erzeugungseinrichtung zum Erzeugen eines einzelnen Referenzsignals mit einer vorbestimmten Referenzfrequenz;

einer Schaltereinrichtung zum Zuführen des einzelnen Referenzsignals an die Glockenfiltereinrichtung (2) innerhalb der vertikalen Rückspurperiode des SECAM-Signals;

einer Einrichtung zum Fixieren der Einrichtung (SW1-SW4) zum ausschließlichen Durchlassen in einer Position entsprechend dem ersten Modus zumindest während der Zuführung des einzelnen Referenzsignals;

einer Einrichtung (61) zum Vergleichen der Phase des einzelnen Referenzsignals mit einer Phase des einzelnen Referenzsignals innerhalb der Glockenfiltereinrichtung und zum Vergleichen der Phase eines zweiten Referenzsignals, bestehend aus dem einzelnen Referenzsignal, wie verarbeitet vor der Zuführung an die Antiglockenfiltereinrichtung mit einer Phase des zweiten Referenzsignals innerhalb der Antiglockenfiltereinrichtung zum Erfassen, ob die jeweiligen erfaßten Phasendifferenzen von jeweiligen Referenzwerten abweichen;

einer Rückkopplungseinrichtung (62, 63) zum Steuern der Zentralfrequenzen der Glocken- und Antiglockenfiltereinrichtung ansprechend auf die Abweichungen der jeweiligen Phasendifferenzen, welche von der Vergleichseinrichtung erfaßt werden, um die Phasendifferenzen auf jeweilige vorbestimmte Werte konvergieren zu lassen; und

einer Einrichtung zum Halten der Zentralfrequenzen auf ihren jeweiligen Werten, die durch die Steuerung in einer Zeitperiode erhalten werden, die von der vertikalen Rückspurperiode verschieden ist.

**8.** SECAM-Chrominanzsignal-Verabeitungsschaltung nach Anspruch 1 mit:

einer Referenzsignal-Erzeugungseinrichtung zum Erzeugen eines einzelnen Referenzsignals mit einer vorbestimmten Referenzfrequenz;

einer Schaltereinrichtung zum Zuführen des einzelnen Referenzsignals an die Antiglockenfiltereinrichtung (8) innerhalb der vertikalen Rückspurperiode des SECAM-Signals;

einer Einrichtung zum Fixieren der Einrichtung (SW1-SW4) zum ausschließlichen Durchlassen in einer Position entsprechend dem zweiten Modus zumindest während der Zuführung des einzelnen Referenzsignals;

einer Einrichtung (61) zum Vergleichen der Phase des einzelnen Referenzsignals mit einer Phase des einzelnen Referenzsignals innerhalb der Antiglockenfiltereinrichtung und zum Vergleichen der Phase eines zweiten Referenzsignals, bestehend aus dem einzelnen Referenzsignal, wie verarbeitet vor der Zuführung an die Glockenfiltereinrichtung mit einer Phase des zweiten Referenzsignals innerhalb der Glockenfiltereinrichtung zum Erfassen, ob die jeweiligen erfaßten Phasendifferenzen von jeweiligen Referenzwerten abweichen;

einer Rückkopplungseinrichtung (62, 63) zum Steuern der Zentralfrequenzen der Glocken- und Antiglockenfiltereinrichtung ansprechend auf die Abweichungen der jeweiligen Phasendifferenzen, welche von der Vergleichseinrichtung erfaßt werden, um die Phasendi fferenzen auf jeweilige vorbestimmte Werte konvergieren zu lassen; und

einer Einrichtung zum Halten der Zentralfrequenzen auf ihren jeweiligen Werten, die durch die Steuerung in einer Zeitperiode erhalten werden, die von der vertikalen Rückspurperiode verschieden ist.

**9.** SECAM-Chrominanzsignal-Verarbeitungsschaltung nach Anspruch 6 bis 8, wobei

das Referenzsignal in den Glockenfilter (3) oder den Antiglockenfilter (8) durch Schalten von Eingangsanschlüssen der ersten und zweiten Filtereinrichtung (1, 6) zum Extrahieren des Chrominanzsignals, welches vor dem Glockenfilter (3) oder dem Antiglockenfilter (8) angeordnet ist, eingespeist wird.

**10.** SECAM-Chrominanzsignal-Verarbeitungsschaltung nach Anspruch 6 bis 8, wobei die Rückkopplungseinrichtung (62, 63) aufweist:

eine Einrichtung (62) zum Erzeugen von Steuerströmen, welche zum Konvergierenlassen der Phasendifferenzen bestimmt sind; und

eine Einrichtung (63) zum Ändern der Steuerströme in Übereinstimmung mit den Modi (P/R).

**Revendications**

1. Circuit de traitement de chrominance SECAM comportant, pour un fonctionnement dans un premier mode pour extraire un signal de chrominance à partir d'un premier signal SECAM d'entrée:

   des premiers moyens de filtre (1) pour extraire un signal de chrominance à partir dudit premier signal SECAM d'entrée;

   des moyens de filtre en cloche (3) présentant une caractéristique de gain de transmission du type en cloche et recevant ledit signal de chrominance extrait;

   des moyens (5) pour diviser en fréquence par quatre le signal passé au travers desdits moyens de filtre en cloche (3);

   des seconds moyens de filtre (6) pour extraire une composante souhaitée à partir du signal divisé en fréquence;

   des moyens de filtre en anti-cloche (8) présentant une caractéristique de gain de transmission du type en cloche inversée et agencés pour recevoir le signal extrait en provenance desdits seconds moyens de filtre pour former un premier signal de sortie filtré en anti-cloche;

   ledit circuit comportant, pour un fonctionnement dans un second mode pour extraire un signal de chrominance à partir d'un second signal d'entrée:

   des seconds moyens de filtre (6) pour extraire un signal de chrominance à partir dudit second signal d'entrée;

   des moyens (SW3, SW2) pour passer de façon exclusive ledit second signal d'entrée au travers desdits seconds moyens de filtre (6) pour extraire un signal de chrominance à partir dudit second signal d'entrée et ensuite au travers desdits moyens de filtre en cloche (3);

   des moyens (9) pour multiplier en fréquence le signal passé au travers desdits moyens de filtre en cloche;

   des moyens (SW1, SW4) pour passer de façon exclusive le signal multiplié en fréquence au travers desdits premiers moyens de filtre (1) et desdits moyens de filtre en anti-cloche (3) afin d'obtenir un second signal de sortie,

   dans lequel les caractéristiques de transmission desdits moyens de filtre en cloche (3) et desdits moyens de filtre en anti-cloche (8) peuvent être décalées en fréquence à l'aide de moyens de commande de décalage de fréquence (2, 7) prévus dans ledit circuit;

   dans lequel, dans ledit premier mode, la caractéristique de transmission desdits moyens de filtre en cloche (3) a sa fréquence centrale décalée jusqu'à une fréquence de centre dudit premier signal SECAM d'entrée et la caractéristique de transmission desdits moyens de filtre en anti-cloche (8) a sa fréquence centrale décalée jusqu'à une fréquence de centre dudit premier signal de sortie, laquelle fréquence de centre correspond à une fréquence de centre dudit second signal d'entrée; et

   dans lequel, dans ledit second mode, la caractéristique de transmission desdits moyens de filtre en cloche (3) a sa fréquence centrale décalée jusqu'à ladite fréquence de centre dudit second signal d'entrée et la caractéristique de transmission desdits moyens de filtre en anti-cloche (8) a sa fréquence centrale décalée jusqu'à ladite fréquence de centre dudit second signal de sortie, laquelle fréquence de centre correspond à ladite fréquence de centre dudit premier signal SECAM d'entrée.

2. Circuit de traitement de chrominance SECAM selon la revendication 1, dans lequel des circuits de commande automatique de chrominance (41 et 42) sont agencés avant au moins soit lesdits moyens de filtre en cloche (3), soit lesdits moyens de filtre en anti-cloche.

3. Circuit de traitement de chrominance SECAM selon la revendication 1, dans lequel les moyens de filtre en cloche (3) ou les moyens de filtre en anti-cloche (8) sont constitués à l'aide d'un filtre actif permettant de commander des caractéristiques de fréquence avec un courant ou une tension et dans lequel les fréquences centrales de filtre sont modifiées par lesdits moyens de commande de décalage de fréquence (2, 7).

4. Circuit de traitement de chrominance SECAM comportant, pour un fonctionnement dans un premier mode pour extraire un signal de chrominance à partir d'un premier signal SECAM d'entrée:

des premiers moyens de filtre (71) pour extraire un signal de chrominance à partir dudit premier signal SECAM d'entrée;

des moyens de filtre en cloche (72) présentant une caractéristique de gain de transmission du type en cloche et recevant ledit signal de chrominance extrait;

des moyens (74) pour diviser en fréquence par quatre le signal passé au travers desdits.moyens de filtre en cloche (72);

des seconds moyens de filtre (75) pour extraire une composante souhaitée à partir du signal divisé en fréquence;

des moyens de filtre en anti-cloche (76) présentant une caractéristique de gain de transmission du type en cloche inversée et agencés pour recevoir le signal extrait en provenance desdits seconds moyens de filtre afin de former un premier signal de sortie filtré en anti-cloche;

ledit circuit comportant, pour un fonctionnement dans un second mode pour extraire un signal de chrominance à partir d'un second signal d'entrée;

lesdits premiers moyens de filtre (71) agencés pour extraire un signal de chrominance à partir dudit second signal d'entrée;

lesdits moyens de filtre en cloche (72) agencés pour recevoir ledit signal de chrominance extrait;

des moyens (77) pour multiplier en fréquence par quatre le signal passé au travers desdits moyens de filtre en cloche;

lesdits seconds moyens de filtre (75) agencés pour extraire une composante souhaitée à partir du signal multiplié en fréquence;

lesdits moyens de filtre en anti-cloche (76) agencés pour recevoir le signal extrait à partir desdits seconds moyens de filtre afin de former un second signal de sortie filtré en anti-cloche;

dans lequel les caractéristiques de transmission desdits moyens de filtre en cloche (72), desdits moyens de filtre en anti-cloche (76), desdits premiers moyens de filtre (71) et desdits seconds moyens de filtre (75) peuvent être décalées en fréquence par des moyens de commande de décalage de fréquence (78, 79) prévus dans ledit circuit;

dans lequel, dans ledit premier mode, les caractéristiques de transmission desdits moyens de filtre en cloche (72) et desdits premiers moyens de filtre (71) ont leurs fréquences centrales décalées jusqu'à la fréquence de centre dudit premier signal SECAM d'entrée et les caractéristiques de transmission desdits moyens de filtre en anti-cloche (76) et desdits seconds moyens de filtre (75) ont leurs fréquences centrales décalées jusqu'à une fréquence de centre dudit premier signal de sortie, laquelle fréquence de centre correspond à la fréquence de centre dudit second signal d'entrée; et

dans lequel, dans ledit second mode, les caractéristiques de transmission desdits moyens de filtre en cloche (72) et desdits premiers moyens de filtre (71) ont leurs fréquences centrales décalées jusqu'à ladite fréquence de centre dudit second signal d'entrée et les caractéristiques de transmission desdits moyens de filtre en anti-cloche (76) et desdits seconds moyens de filtre (75) ont leurs fréquences centrales décalées jusqu'à ladite fréquence de centre dudit second signal de sortie, laquelle fréquence de centre correspond à ladite fréquence de centre dudit premier signal SECAM d'entrée.

5. Circuit de traitement de chrominance SECAM selon la revendication 4, comprenant un sélecteur de borne d'entrée de signal de chrominance (SW$_9$) partagé par lesdits premier et second modes.

6. Circuit de traitement de chrominance SECAM selon la revendication 1, comprenant:

des moyens de génération de signal de référence (51, 52) pour générer une pluralité de signaux de référence présentant des fréquences de référence prédéterminées respectives (f1, f2);

des moyens (SW5, SW6) pour, de façon simultanée et exclusive, appliquer un premier desdits signaux de référence sur lesdits moyens de filtre en cloche (3) et un second desdits signaux de référence sur lesdits moyens de filtre en anti-cloche (8) dans la période de retour vertical dudit signal SECAM;

des moyens (61) pour comparer la phase dudit premier signal de référence avec une phase dudit premier signal de référence dans lesdits moyens de filtre en cloche et pour comparer la phase dudit second signal de référence avec une phase dudit second signal de référence dans lesdits moyens de filtre en anti-cloche pour détecter si les différences de phase respectives sont déviées par rapport à une valeur de référence respective;

des moyens de retour (62, 63) pour commander les fréquences centrales desdits moyens de filtre en cloche et en anti-cloche en réponse aux déviations de celles respectives desdites différences de phase détectées par lesdits moyens de comparaison de manière à faire en sorte que les différences de phase convergent vers une valeur prédéterminée;

des moyens pour bloquer lesdites fréquences centrales au niveau de leurs valeurs respectives obtenues au moyen de ladite commande dans une période temporelle autre que ladite période de retour vertical.

7. Circuit de traitement de chrominance SECAM selon la revendication 1, comprenant:

des moyens de génération de signal de référence pour générer un unique signal de référence présentant une fréquence de référence prédéterminée;

des moyens de commutateur pour appliquer ledit unique signal de référence sur lesdits moyens de filtre en cloche (3) dans la période de retour vertical dudit signal SECAM;

des moyens pour fixer lesdits moyens (SW1-SW4) pour les faire passer de façon exclusive dans une position correspondant audit premier mode au moins pendant l'application dudit unique signal de référence;

des moyens (61) pour comparer la phase dudit unique signal de référence avec une phase dudit unique signal de référence dans lesdits moyens de filtre en cloche et pour comparer la phase d'un second signal de référence constitué par ledit unique signal de référence tel que traité avant d'être appliqué sur lesdits moyens de filtre en anti-cloche avec une phase dudit second signal de référence dans lesdits moyens de filtre en anti-cloche, pour détecter si les différences de phase détectées respectives sont déviées par rapport à des valeurs de référence respectives;

des moyens de retour (62, 63) pour commander les fréquences centrales desdits moyens de filtre en cloche et en anti-cloche en réponse aux déviations de celles respectives desdites différences de phase détectées par lesdits moyens de comparaison de manière à faire en sorte que les différences de phase convergent vers des valeurs prédéterminées respectives;

des moyens pour bloquer lesdites fréquences centrales au niveau de leurs valeurs respectives obtenues au moyen de ladite commande dans une période temporelle autre que ladite période de retour vertical.

8. Circuit de traitement de chrominance SECAM selon la revendication 1, comprenant:

des moyens de génération de signal de référence pour générer un unique signal de référence présentant une fréquence de référence prédéterminée;

des moyens de commutateur pour appliquer ledit unique signal de référence sur lesdits moyens de filtre en anti-cloche (8) dans la période de retour vertical dudit signal SECAM;

des moyens pour fixer lesdits moyens (SW1-SW4) pour les faire passer de façon exclusive dans une position correspondant audit second mode au moins pendant l'application dudit unique signal de référence;

des moyens (61) pour comparer la phase dudit unique signal de référence avec une phase dudit unique signal de référence dans lesdits moyens de filtre en anti-cloche et pour comparer la phase d'un second signal de référence constitué par ledit unique signal de référence tel que traité avant d'être appliqué sur lesdits moyens de filtre en cloche avec une phase dudit second signal de référence dans lesdits moyens de filtre en cloche, pour détecter si les différences de phase détectées respectives sont déviées par rapport à des valeurs de référence respectives;

des moyens de retour (62, 63) pour commander les fréquences centrales desdits moyens de filtre en cloche et en anti-cloche en réponse aux déviations de celles respectives desdites différences de phase détectées par lesdits moyens de comparaison de manière à faire en sorte que les différences de phase convergent vers des valeurs prédéterminées respectives;

des moyens pour bloquer lesdites fréquences centrales à leurs valeurs respectives obtenues par ladite commande dans une période temporelle autre que ladite période de retour vertical.

9. Circuit de traitement de chrominance SECAM selon les revendications 6 à 8, dans lequel:

ledit signal de référence est appliqué dans ledit filtre en cloche (3) ou dans ledit filtre en anti-cloche (8) en commutant des bornes d'entrée desdits premiers et seconds moyens de filtre (1, 6) pour extraire ledit signal de chrominance agencés avant ledit filtre en cloche (3) ou ledit filtre en anti-cloche (8).

10. Circuit de traitement de chrominance SECAM selon les revendications 6 à 8, dans lequel lesdits moyens de retour (62, 63) comprennent:

des moyens (62) pour générer des courants de commande déterminés afin de faire en sorte que lesdites différences de phase convergent; et

des moyens (63) pour modifier lesdits courants de commande conformément auxdits modes (P/R).

20

# FIG. I

EP 0 626 795 B1

# FIG. 2

# FIG. 3

# FIG. 4

# FIG. 5

# FIG. 6

EP 0 626 795 B1

# FIG. 7

EP 0 626 795 B1

# FIG. 8

# FIG. 9

# FIG. 10

EP 0 626 795 B1

# FIG. 11

ANTIBELL PHASE CHARACTERISTIC DIAGRAM

FIG. 12

FIG. 13

# FIG. 14

PHASE DETECTOR 1034

Gm CONTROL CIRCUIT 1042

1043 1044 1045 1046

EP 0 626 795 B1

# FIG. 15

# FIG. 16

## PRIOR ART

EP 0 626 795 B1

# FIG. 17

## PRIOR ART

# FIG. 18

## PRIOR ART

# F I G. 19

## PRIOR ART

# F I G. 20

## PRIOR ART

# F I G. 2 I

PRIOR ART

# F I G. 22

PRIOR ART

# FIG. 23

### PRIOR ART